# EUROPEAN PATENT SPECIFICATION

(11) **EP 4 383 740 B1**
(45) Date of publication and mention of the grant of the patent: **02.12.2026**
(21) Application number: 22872558.6
(22) Date of filing: 29.07.2022
(51) Int. Cl.: H04N 23/67, H04N 23/69, H04N 23/60, H04N 23/61, G02B 7/28, G02B 7/36, G02B 7/40, G03B 13/36, G06T 7/00

(54) **IMAGING DEVICE AND IMAGING METHOD**
BILDGEBUNGSVORRICHTUNG UND BILDGEBUNGSVERFAHREN
DISPOSITIF D'IMAGERIE ET PROCÉDÉ D'IMAGERIE

(30) Priority: 27.09.2021 JP 2021156799; 27.09.2021 JP 2021156800; 27.09.2021 JP 2021156863; 27.09.2021 JP 2021157146; 27.09.2021 JP 2021157147; 27.09.2021 JP 2021157148; 27.09.2021 JP 2021157244; 27.09.2021 JP 2021157250
(43) Date of publication of application: 12.06.2024
(73) Proprietor: JVCKENWOOD Corporation, Yokohama-shi, Kanagawa 221-0022 (JP)
(72) Inventor: NAKAJIMA, Nobuki, Yokohama-shi, Kanagawa 2210022 (JP)
(74) Representative: Carstens, Dirk Wilhelm
(86) International application number: PCT/JP2022/029298
(87) International publication number: WO 2023/047802

(56) References cited:
- WO-A1-2019/187648
- JP-A- 2010 243 730
- JP-A- 2013 251 780
- JP-A- 2018 084 802
- JP-A- 2019 102 846
- JP-A- H02 118 610
- US-A1- 2005 162 540
- US-A1- 2009 116 830
- US-A1- 2020 228 719

## Description

### Field

The present invention relates to an imaging device and an imaging method.

### Background

An autofocus imaging device that automatically adjusts a focal position is known. For example, WO 2017/141746 A describes that focus is adjusted on a predetermined position designated by a user.

WO 2017/141746 A discloses an imaging device, an imaging control method, and a program.

US 2009 116830 A discloses an imaging apparatus including: an object information holding unit to hold a size of a predetermined object included in a subject; an imaging unit to convert incident light from the subject to a captured image; an object detecting unit to detect the object included in the captured image and a size of an object image; an object-autofocus-range calculating unit to calculate an object-autofocus-range that is a limited movement range of a focus lens; a use determination range calculating unit to calculate a use determination range that is a range to determine whether detection of an in-focus position of the detected object is to be performed in the object-autofocus-range and that includes the object-autofocus-range; and an autofocus control unit to detect the in-focus position by setting the object-autofocus-range and moving the focus lens in the object-autofocus-range if a current position of the focus lens is within the use determination range.

JP 2013 251780 A discloses an imaging apparatus including: an imaging optical system; control means for controlling focus movement; subject detecting means that detects a first subject, as a focus target area, from image data generated via the imaging means; and subject measuring means that measures in time series the positions of the characteristic point of the face of the first subject present in the focus target area. In the imaging apparatus, the control means controls a focus movement speed in accordance with an amount of time-series change in the direction of the first subject, calculated from the position of the characteristic point of the subject, measured by the subject measuring means. The control means carries out focus movement to a second subject detected by the subject detecting means.

US 2020 228719 A discloses a focus control apparatus including a determination unit configured to determine whether the object is a moving object, and a control unit configured to move, during a magnification variation, a focus element to a first target position when the object is not the moving object, and to a second target position when the object is the moving object.

US 2005 162540 A discloses an autofocus system for controlling the focus of a taking lens by specifying a subject to be autofocused within an AF area, which is part of the field of view of a camera, and automatically focusing on the subject.

### Summary

In an autofocus imaging device, it is required to adjust the focus appropriately.

In view of the above problems, an object of the present embodiment is to provide an imaging device, an imaging method, and a program capable of appropriately setting a focus.

In accordance with the present invention, an imaging device and an imaging method as set forth in the appended claims is provided. In particular, according to one aspect of the present embodiment, there is provided an imaging device capable of imaging an object according to claim 1, the imaging device comprising: an imaging element; an object information acquisition unit configured to acquire position information of an object existing in an imaging region that can be captured as an image in a real space of the imaging element, wherein the position information is based on time of flight image information; and a focal position controller configured to control a focal position of the imaging device by moving a position of an optical element provided in the imaging device, wherein the focal position controller is further configured to: adjust the focal position on an object that exists in a target region and performs a predetermined motion in a moving direction or with a moving speed, the target region being set within a range of the imaging region and being a region surrounded by a first position, a second position, and a third position, wherein the first position is a virtual plane including each position where a distance from the imaging device is a first distance set in advance, the second position is a virtual plane including each position where a distance from the imaging device is a second distance set in advance and shorter than the first distance, and the third position is a virtual surface dividing the target region with respect to the imaging region in a direction radially outward from an optical axis of the imaging device, including positions radially outward and away from the optical axis of the imaging device by a predetermined distance; keep adjusting the focal position on the object while the object exists in the target region and performs the predetermined motion; and stop adjusting the focal position on the object when the object moves out of the target region or the object no longer performs the predetermined motion.

According to one aspect of the present embodiment, there is provided an imaging method for imaging an object according to claim 8, the imaging method comprising: a step of acquiring position information of an object existing in an imaging region that can be captured as an image in a real space of an imaging element, wherein the position information is based on time of flight image information;a step of determining whether the object performs a predetermined motion,a step of controlling a focal position of an imaging device by moving a position of an optical element provided in the imaging device; and wherein the step of controlling the focal position further comprises: adjusting the focal position on the object that exists in a target region and performs the predetermined motion in a moving direction or with a moving speed, the target region being set within a range of the imaging region and being a region surrounded by a first position, a second position, and a third position, wherein the first position is a virtual plane including each position where a distance from the imaging device is a first distance set in advance, the second position is a virtual plane including each position where a distance from the imaging device is a second distance set in advance and shorter than the first distance, and the third position is a virtual surface dividing the target region with respect to the imaging region in a direction radially outward from an optical axis of the imaging device; keeping adjusting the focal position on the object while the object exists in the target region and performs the predetermined motion; and stopping adjusting the focal position on the object when the object moves out of the target region or the object no longer performs the predetermined motion.

According to one non-claimed aspect of the present embodiment, there is provided a computer program executed by a computer operating as an imaging device, the computer program comprising: a step of acquiring position information of an object existing in an imaging region; and a step of controlling a focal position of an imaging device, wherein the step of controlling the focal position further comprising: adjusting the focal position on an object existing in a target region between a first position where a distance from the imaging device is a first distance and a second position where a distance from the imaging device is a second distance shorter than the first distance; keeping adjusting the focal position on the object while the object exists in the target region; and removing the focal position from the object when the object moves out of the target region.

According to the present embodiment, the focus can be adjusted appropriately.

### Brief Description of Drawings

FIG. 1 is a schematic block diagram of an imaging device according to a first embodiment;
FIG. 2 is a schematic diagram for explaining an example of a target region;
FIG. 3 is a schematic diagram for explaining an example of a target region;
FIG. 4 is a schematic diagram illustrating another example of the target region;
FIG. 5 is a schematic diagram illustrating another example of the target region;
FIG. 6 is a flowchart for explaining a processing flow of adjusting a focal position;
FIG. 7 is a schematic diagram illustrating an example of a case in which motion of the object is set as a predetermined condition;
FIG. 8 is a flowchart for explaining a processing flow of adjusting a focal position in a second embodiment;
FIG. 9 is a schematic diagram illustrating an example of a case in which multiple objects exist in a target region;
FIG. 10 is a flowchart for explaining a processing flow of adjusting a focal position according to a third embodiment;
FIG. 11 is a schematic diagram for explaining a method of adjusting a focal position in a fourth embodiment;
FIG. 12 is a flowchart for explaining a processing flow of adjusting a focal position according to the fourth embodiment;
FIG. 13 is a schematic block diagram of an imaging device according to a fifth embodiment;
FIG. 14 is a schematic diagram for explaining an example of a target region;
FIG. 15 is a schematic diagram for explaining an example of a target region;
FIG. 16 is a schematic diagram illustrating another example of the target region;
FIG. 17 is a schematic diagram illustrating another example of the target region;
FIG. 18 is a flowchart for explaining a processing flow of adjusting a focal position;
FIG. 19 is a schematic diagram for explaining adjusting of a focal position in a sixth embodiment;
FIG. 20 is a flowchart for explaining a processing flow of adjusting a focal position in the sixth embodiment;
FIG. 21 is a schematic diagram illustrating an example of a case in which motion of the object is set as a predetermined condition;
FIG. 22 is a schematic block diagram of an imaging device according to an eighth embodiment;
FIG. 23 is a schematic diagram for explaining an example of a target region;
FIG. 24 is a schematic diagram for explaining an example of a target region;
FIG. 25 is a schematic diagram illustrating another example of the target region;
FIG. 26 is a schematic diagram illustrating another example of the target region;
FIG. 27 is a flowchart for explaining a processing flow of adjusting a focal position; and
FIG. 28 is a schematic diagram illustrating an example of a case in which motion of the object is set as a predetermined condition.

### Description of Embodiments

Hereinafter, the present embodiments will be described in detail with reference to the drawings. Note that the present embodiments are not limited to the embodiments described below.

### (First Embodiment)

### (Configuration of Imaging Device)

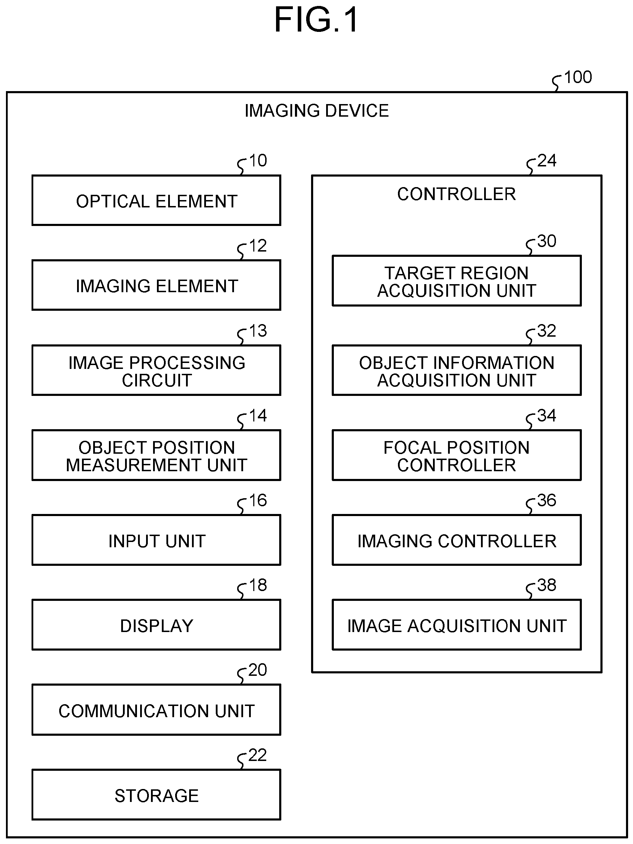

FIG. 1 is a schematic block diagram of an imaging device according to a first embodiment. An imaging device 100 according to the first embodiment is an imaging device that images an object within an imaging range. The imaging device 100 is an autofocus camera capable of adjusting a focal position automatically. The imaging device 100 may be a video camera that captures a moving image by capturing an image for each predetermined frame, or may be a camera that captures a still image. The imaging device 100 may be used for any purpose, and for example, may be used as a monitoring camera provided at a predetermined position in facilities or outdoors.

As illustrated in FIG. 1, the imaging device 100 includes an optical element 10, an imaging element 12, an image processing circuit 13, an object position measurement unit 14, an input unit 16, a display 18, a communication unit 20, a storage 22, and a controller 24.

The optical element 10 is, for example, an element of an optical system such as a lens. The number of optical elements 10 may be one or plural.

The imaging element 12 is an element that converts light incident through the optical element 10 into an image signal that is an electric signal. The imaging element 12 is, for example, a charge coupled device (CCD) sensor, a complementary metal oxide semiconductor (CMOS) sensor, or the like.

The image processing circuit 13 generates image data for each frame from the image signal generated by the imaging element 12. The image data is, for example, data including information of luminance and color of each pixel in one frame, and may be data to which gradation for each pixel is assigned.

The object position measurement unit 14 is a sensor that measures a position of an object to be measured with respect to the imaging device 100 (a relative position of the object). The object here may be any object, and may be a living thing or an inanimate object, and it similarly applies to following descriptions. In addition, the object here may refer to a movable object, but is not limited thereto, and may refer to an object that does not move.

In the present embodiment, the object position measurement unit 14 measures the distance from the imaging device 100 to the object as the relative position of the object. The object position measurement unit 14 may be any sensor capable of measuring the relative position of the object, and may be, for example, a time of flight (TOF) sensor. In a case in which the object position measurement unit 14 is a TOF sensor, for example, a light emitting element (for example, a light emitting diode (LED) that emits light and a light receiving unit that receives light are provided, and the distance to the object is measured by a flight time of the light emitted from the light emitting element to the object and returned to the light receiving unit. Note that, in addition to measuring the distance from the imaging device 100 to the object as the relative position of the object, the object position measurement unit 14 may also measure, for example, a direction in which the object exists with respect to the imaging device 100. In other words, the object position measurement unit 14 may measure, as the relative position of the object, the position (coordinates) of the object in the coordinate system in which the imaging device 100 is set as an origin.

The input unit 16 is a mechanism that receives an input (operation) from a user, and may be, for example, a button, a keyboard, a touch panel, or the like.

The display 18 is a display panel that displays an image. In addition to the image captured by the imaging device 100, the display 18 may be capable of displaying an image for the user to set a target region AR described later.

The communication unit 20 is a communication module that communicates with an external device, and may be, for example, an antenna, a Wi-Fi (registered trademark) module, or the like. Although the imaging device 100 communicates with an external device by wireless communication, wired communication may be used, and a communication method may be arbitrary.

The storage 22 is a memory that stores captured image data and various types of information such as calculation contents and programs of the controller 24, and includes at least one of, for example, a random access memory (RAM), a main storage device such as a read only memory (ROM), or an external storage device such as a hard disk drive (HDD). The program for the controller 24 stored in the storage 22 may be stored in a recording medium readable by the imaging device 100.

The controller 24 is an arithmetic device, and includes, for example, an arithmetic circuit such as a central processing unit (CPU). The controller 24 includes a target region acquisition unit 30, an object information acquisition unit 32, a focal position controller 34, an imaging controller 36, and an image acquisition unit 38. The controller 24 reads and executes a program (software) from the storage 22 to implement the target region acquisition unit 30, the object information acquisition unit 32, the focal position controller 34, the imaging controller 36, and the image acquisition unit 38, and executes these processes. Note that the controller 24 may execute these processes by one CPU, or may include multiple CPUs and execute the processes by the multiple CPUs. In addition, at least a part of the processing of the target region acquisition unit 30, the object information acquisition unit 32, the focal position controller 34, the imaging controller 36, and the image acquisition unit 38 may be implemented by a hardware circuit.

### (Target Region Acquisition Unit)

The target region acquisition unit 30 acquires information of a target region AR set in an imaging region of the imaging device 100. The target region AR is a region set to adjust the focal position automatically. The information of the target region AR is information indicating the position of the target region AR, that is, position information of the target region AR. Hereinafter, the target region AR will be described.

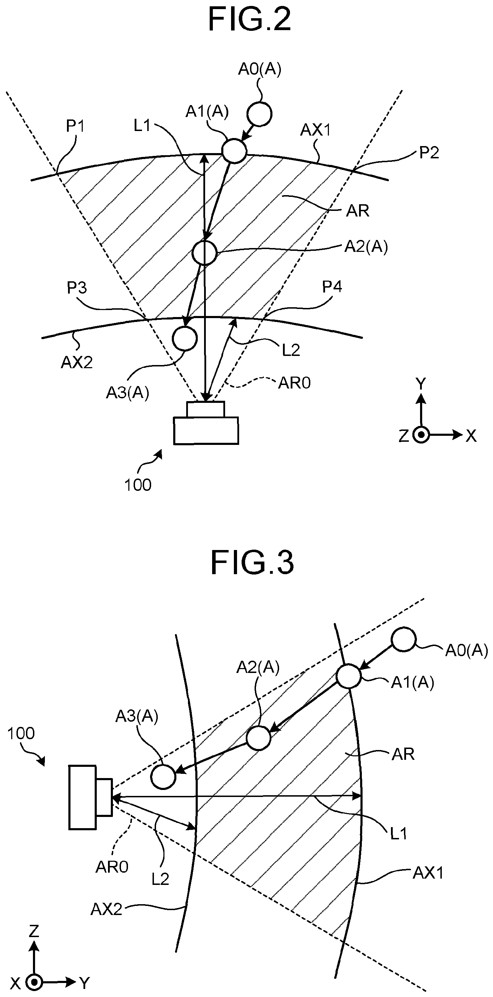

FIGS. 2 and 3 are schematic diagrams for explaining an example of a target region. FIG. 2 is a diagram of the imaging device 100 and the target region AR as viewed from above in a vertical direction, and FIG. 3 is a diagram of the imaging device 100 and the target region AR as viewed from a horizontal direction. Hereinafter, the direction Z is a vertical direction, the direction X is one direction of a horizontal direction orthogonal to the direction Z, and the direction Y is a direction (horizontal direction) orthogonal to the direction Z and the direction X. As illustrated in FIGS. 2 and 3, a range in which an image can be captured by the imaging device 100 is defined as an imaging region AR0 The imaging region AR0 refers to a region (space) within an angle of view of the imaging element 12, in other words, a range that can be captured as an image in the real space. The target region AR is a region (space) set within the range of the imaging region AR0.

More specifically, the target region AR is a region between a first position AX1 and a second position AX2 in the imaging region AR0. The first position AX1 is a position where a distance from the imaging device 100 is a first distance L1, and the second position AX2 is a position where a distance from the imaging device 100 is a second distance L2 shorter than the first distance L1. As illustrated in FIGS. 2 and 3, in the present embodiment, the first position AX1 can be said to be a virtual plane including each position (coordinate) where the distance from the imaging device 100 is the first distance L1 in the imaging region AR0. Similarly, the second position AX2 can be said to be a virtual plane including each position (coordinate) at which the distance from the imaging device 100 is the second distance L2 in the imaging region AR0. That is, the target region AR can be said to be a space surrounded by a virtual plane whose distance from the imaging device 100 is the second distance L2 and a virtual plane whose distance from the imaging device 100 is the first distance L1 in the imaging region AR0. Note that the first position AX1 is not limited to a virtual plane in which all positions (coordinates) included in the first position AX1 become the first distance L1 from the imaging device 100, and may be a virtual plane in which at least some positions (coordinates) included in the first position AX1 become the first distance L1 from the imaging device 100. Similarly, the second position AX2 may be a virtual plane in which at least a part of the position (coordinates) included in the second position AX2 is a second distance L2 from the imaging device 100.

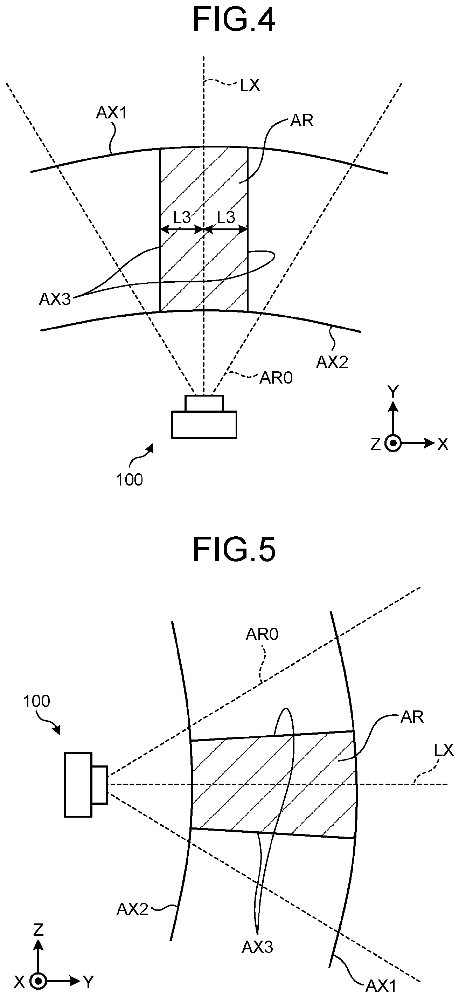

FIGS. 4 and 5 are schematic diagrams illustrating a target region according to the invention. In the description of FIGS. 2 and 3, which represents an example that does not fall within the scope of the claimed invention, the target region AR is divided by the first position AX1 and the second position AX2 with respect to the imaging region AR0 in the optical axis direction (depth direction of the image) of the imaging device 100, but is not divided with respect to the imaging region AR0 in a radiation direction (a spread direction of an angle of view) with respect to the optical axis direction of the imaging device 100. In other words, end surfaces in the direction in which the angle of view of the target region AR spreads coincide with end surfaces in the direction in which the angle of view of the imaging region AR0 spreads. However, according to the present invention, the target region AR is also be divided with respect to the imaging region AR0 in the direction in which the angle of view spreads. That is, for example, as illustrated in FIGS. 4 and 5, the target region AR is also be divided with respect to the imaging region AR0 in the spread direction of the angle of view by a third position AX3. In this example, the third position AX3 is a virtual surface (here, a closed curved surface having a side surface shape of a cylinder) including positions (coordinate) radially outward and away from the optical axis LX of the imaging device 100 by a predetermined distance. In this case, the target region AR is a region (space) surrounded by the first position AX1, the second position AX2, and the third position AX3. Note that the third position AX3 is not limited to a virtual plane in which all positions (coordinates) included in the third position AX3 become the third distance L3 from the optical axis LX, and may be a virtual plane in which at least some positions (coordinates) included in the third position AX3 become the third distance L3 from the optical axis LX. For example, the third position AX3 may be a virtual plane that expands radially outward (in a horizontal direction and an elevation angle direction) at a predetermined angle as the distance from the imaging device 100 increases along the optical axis direction.

Note that in examples not covered by the claimed invention the size and the shape of the target region AR are not limited to the above description and may be arbitrary. Furthermore, in the above description, the target region AR is a region set in the imaging region AR0, but in examples not covered by the claimed invention, the present invention is not limited thereto. For example, when a range that can be measured by the object position measurement unit 14 is a distance measurement region (a distance measurement space), the target region AR may be a region set in the distance measurement region. In this case, the imaging region AR0 in FIGS. 2 to 5 may be treated as a distance measurement region.

The target region acquisition unit 30 may acquire the information of the target region AR by an arbitrary method. For example, the position of the target region AR may be set in advance. In this case, the target region acquisition unit 30 may read the position information of the target region AR set in advance from the storage 22, or may acquire the position information of the target region AR from another device via the communication unit 20. Furthermore, for example, in a case in which the position of the target region AR is not set in advance, the target region acquisition unit 30 may set the position of the target region AR automatically. Furthermore, for example, the user may set the position of the target region AR. In this case, for example, the user may input information (for example, values of the first distance L1, the second distance L2, and the third distance L3, and the like) designating the position of the target region AR to the input unit 16, and the target region acquisition unit 30 may set the target region AR based on the position information of the target region AR designated by the user. Furthermore, for example, the target region AR may be set by designating coordinates. That is, for example, in the example of FIG. 2, coordinates P1, P2, P3, and P4 that are vertex positions of the target region AR may be designated, and a region surrounded by the coordinates P1 to P4 may be set as the target region AR.

### (Object Information Acquisition Unit)

The object information acquisition unit 32 acquires position information of an object existing in an imaging region AR0. The object information acquisition unit 32 controls the object position measurement unit 14 to cause the object position measurement unit 14 to measure the relative position of the object with respect to the imaging device 100. The object information acquisition unit 32 acquires a measurement result of the relative position of the object with respect to the imaging device 100 by the object position measurement unit 14 as position information of the object. The object information acquisition unit 32 sequentially acquires the position information of the object by acquiring the position information of the object every predetermined time. Furthermore, the object information acquisition unit 32 can also acquire information indicating a shape of the object (for example, a 3D shape of the object) based on the position information of the object. For example, the object information acquisition unit 32 can acquire the 3D shape of the object by accumulating multiple pieces of position information such as TOF image information.

### (Focal Position Controller)

The focal position controller 34 sets a focal position of the imaging device 100. The focal position controller 34 controls the focal position by controlling a position of the optical element 10, that is, by moving the position of the optical element 10.

The focal position controller 34 adjusts the focal position on the object existing in the target region AR. In other words, the focal position controller 34 sets the focal position at the position of the object determined to exist in the target region AR. In the present embodiment, the focal position controller 34 determines whether the object exists in the target region AR based on the position information of the object acquired by the object information acquisition unit 32. In a case in which the position of the object acquired by the object information acquisition unit 32 overlaps with the position of the target region AR, the focal position controller 34 determines that the object exists in the target region AR and sets the focal position at the position of the object acquired by the object information acquisition unit 32. That is, for example, in a case in which the distance from the imaging device 100 to the object is equal to or smaller than the first distance L1 and equal to greater than the second distance L2, the focal position controller 34 determines that the object exists in the target region AR and adjusts the focal position on the object. On the other hand, the focal position controller 34 does not adjust the focal position of the object that does not exist in the target region AR. That is, for example, in a case in which the distance from the imaging device 100 to the object is longer than the first distance L1 or shorter than the second distance L2, the focal position controller 34 determines that the object does not exist in the target region AR and does not adjust the focal position on the object.

The focal position controller 34 keeps adjusting the focal position on the object during a period in which the object at the focal position exists in the target region AR. That is, the focal position controller 34 determines whether or not the object continues to exist in the target region AR based on the position information of the object at every predetermined time acquired by the object information acquisition unit 32, and keeps adjusting the focal position on the object during a period in which the object continues to exist in the target region AR. On the other hand, in a case in which the object on the focal position moves out of the target region AR, that is, in a case in which the object no longer exists in the target region AR, the focal position controller 34 takes the focal position out of the object and focuses on a position other than the object.

Note that the focal position controller 34 may not set the focal position of the object existing in the target region AR from the start of operation of the imaging device 100 (a timing at which the imaging becomes possible). That is, the focal position controller 34 may set the focal position of the object entering the target region AR after starting the operation. In other words, the focal position controller 34 may set the focal position of an object from a timing at which the object starts to exist in the target region AR for the object that exists in the target region AR at a certain timing but does not exist in the target region AR at a timing before the certain timing. In other words, in a case in which the object moves from the outside of the target region AR into the target region AR, the object may be recognized as a target on which the focal position controller 34 focuses. That is, the focal position controller 34 may set the focal position of the object moved from the outside of the target region AR into the target region AR.

Furthermore, in a case in which there is no object in the target region AR, the focal position controller 34 may set the focal position to a preset setting position. The preset setting position may be arbitrarily set, but is preferably set in the target region AR such as a center position of the target region AR.

An example of setting the focal position described above will be described with reference to FIG. 2. FIG. 2 illustrates an example in a case in which the object A moves from a position A0 to a position A3 through a position A1 and a position A2 toward the imaging device 100. At the position A0, the distance to the imaging device 100 is longer than the first distance L1 and is outside the target region AR. Since the distance to the imaging device 100 is equal to or smaller than the first distance L1 equal to or greater than the second distance L2, the position A1 and the position A2 are within the target region AR. The distance from the imaging device 100 to the position A3 is shorter than the second distance L2 and is outside the target region AR. In this case, the focal position controller 34 does not set the focal position on the object A at a timing when the object A exists at the position A0, and adjusts the focal position on the preset setting position, for example. Then, the focal position controller 34 adjusts the focal position on the object A at a timing when the object A exists at the position A1, that is, at a timing when the object A enters the target region AR. The focal position controller 34 keeps adjusting the focal position on the object A even at a timing when the object A exists at the position A2, removes the focal position from the object A at a timing when the object A moves to the position A3, that is, at a timing when the object A goes out of the target region AR, and returns the focal position to the setting position. That is, the focal position controller 34 adjusts the focal position on the object A from the timing at which the object A enters the target region AR, moves the focal position to the moving object A while the object A moves in the target region AR, and removes the focal position from the object A at the timing at which the object A moves out of the target region AR.

Note that the focal position may be set by the user. In this case, for example, an auto mode in which the focal position is automatically adjusted and a manual mode in which the focal position is adjusted by the user may be switchable. Then, in a case of the auto mode, the focal position is adjusted by the focal position controller 34 as described above. On the other hand, in a case of the manual mode, the user inputs an operation of adjusting the focal position to the input unit 16, and the focal position controller 34 adjusts the focal position according to the user's operation.

### (Imaging Controller)

The imaging controller 36 controls imaging by the imaging device 100 to capture an image. The imaging controller 36 controls, for example, the imaging element 12 to cause the imaging element 12 to acquire an image signal. For example, the imaging controller 36 may cause the imaging element 12 to acquire the image signal automatically, or may cause the imaging element 12 to acquire the image signal according to a user's operation.

### (Image Acquisition Unit)

The image acquisition unit 38 acquires image data acquired by the imaging element 12. For example, the image acquisition unit 38 controls the image processing circuit 13 to cause the image processing circuit 13 to generate image data from the image signal generated by the imaging element 12, and acquires the image data. The image acquisition unit 38 stores the image data in the storage 22.

### (Flow of Adjusting Focal Position)

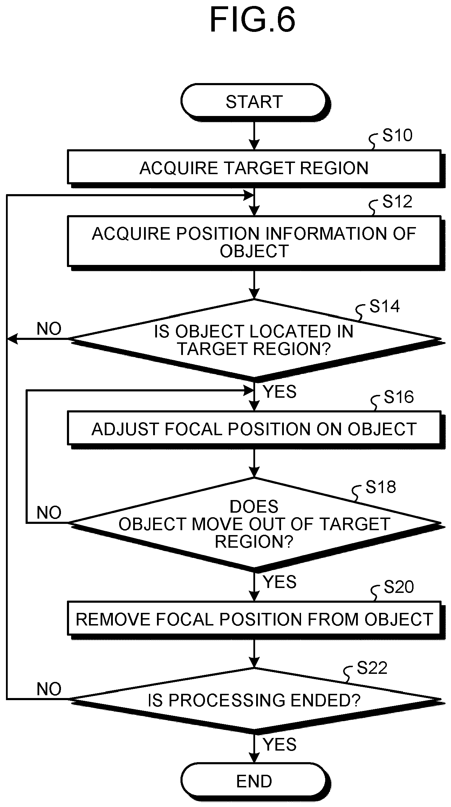

Next, a processing flow of adjusting the focal position described above will be described. FIG. 6 is a flowchart for explaining a processing flow of adjusting a focal position. As illustrated in FIG. 6, the controller 24 causes the target region acquisition unit 30 to acquire information of the target region AR (Step S10), and causes the object information acquisition unit 32 to acquire position information of the object (Step S12). An execution order of Steps S10 and S12 may be arbitrary. The controller 24 causes the focal position controller 34 to determine whether the object is located in the target region AR based on the position information of the object (Step S14). In a case in which the object is not located in the target region AR (Step S14; No), the process returns to Step S12, and the acquisition of the position information of the object is continued. On the other hand, in a case in which the object is located in the target region AR (Step S14; Yes), the focal position controller 34 adjusts the focal position on the object (Step S16). Thereafter, the acquisition of the position information of the object is continued, and it is determined whether the object has moved out of the target region AR (Step S18). In a case in which the object does not move out of the target region AR (Step S18; No), that is, in a case in which the object continues to exist in the target region AR, the process returns to Step S16, and the focal position is kept on the object. In a case in which the object has moved out of the target region AR (Step S18; Yes), the focal position controller 34 removes the focal position from the object (Step S20). Thereafter, in a case in which the processing is not ended (Step S22; No), the process returns to Step S12, and in a case in which the processing is ended (Step S22; Yes), this process ends.

### (Effects)

As described above, the imaging device 100 according to the present embodiment includes the imaging element 12, the object information acquisition unit 32 that acquires the position information of the object existing in the imaging region AR0 of the imaging element 12, and the focal position controller 34 that controls the focal position of the imaging device 100. The focal position controller 34 adjusts the focal position on the object existing in the target region AR, continues to adjust the focal position on the object during the period in which the object exists in the target region AR, and removes the focal position from the object when the object moves out of the target region AR. The target region AR is a region between the first position AX1 at which the distance from the imaging device 100 is the first distance L1 and the second position AX at which the distance from the imaging device 100 is the second distance L2 shorter than the first distance L1.

Here, in an autofocus imaging device, it is required to set a focal position appropriately. For that, the imaging device 100 according to the present embodiment adjusts the focal position on the object existing in the target region AR, continues to adjust the focal position on the object in a case in which the object continues to exist in the target region AR, and removes the focal position when the object goes out of the target region AR. Therefore, for example, it is possible to keep adjusting the focal position on an object existing in a target region that is a remarkable region in monitoring or the like. In addition, in a case in which the object comes out of the remarkable region, such as in a case in which the object is farther than the first distance L1 or closer than the second distance L2, it is possible to remove the focal position from the object and suppress the focus from being shifted from the remarkable region. Therefore, according to the present embodiment, the focal position can be set appropriately.

Furthermore, the focal position controller 34 controls the focal position by moving the position of the optical element 10 provided in the imaging device 100. According to the present embodiment, the focal position can be set appropriately.

### (Second Embodiment)

Next, a second embodiment will be described. The second embodiment is different from the first embodiment in that a focal position is adjusted on an object that exists in a target region AR and satisfies a predetermined condition. In the second embodiment, the description of portions having the same configuration as that of the first embodiment will be omitted.

In the second embodiment, the focal position controller 34 sets the focal position of an object that exists in the target region AR and satisfies a predetermined condition. The focal position controller 34 does not set the focal position on the object that does not satisfy at least one of a condition that the object exists in the target region AR and a condition that the predetermined condition is satisfied. The focal position controller 34 keeps adjusting the focal position on the object while the object on the focal position continues to exist in the target region AR with satisfying a predetermined condition. On the other hand, in a case in which the object no longer satisfies at least one of the condition that the object exists in the target region AR and the condition that the predetermined condition is satisfied, the focal position controller 34 removes the focal position from the object. That is, for example, in a case in which the object satisfies the predetermined condition but moves out of the target region AR, or in a case in which the object exists in the target region AR but no longer satisfies the predetermined condition, the focal position controller 34 removes the focal position from the object.

The focal position controller 34 may determine whether the predetermined condition is satisfied by an arbitrary method, but for example, may determine whether the predetermined condition is satisfied based on at least one of the position information of the object or the image of the object. Here, the position information of the object may refer to a measurement result of the object position measurement unit 14, and the image of the object may refer to image data which is acquired by the imaging element 12 and in which the object is imaged.

The predetermined condition here may be any condition except a condition that the object does not exist in the target region AR. For example, the predetermined condition may be at least one of a condition that the object is performing a predetermined motion, a condition that the object has a predetermined shape, or a condition that the object is oriented in a predetermined direction. In addition, any two of these conditions may be set as the predetermined condition, or all of these conditions may be set as the predetermined condition. In a case in which multiple predetermined conditions are set, the focal position controller 34 determines that the predetermined conditions are satisfied in a case in which all the conditions are satisfied.

A case in which the motion of the object is set to a predetermined condition will be described. In this case, the focal position controller 34 determines whether the object is performing a predetermined motion based on the position information of the object continuously acquired in time series. The focal position controller 34 adjusts the focal position of the object existing in the target region AR and performing a predetermined motion. The focal position controller 34 does not adjust the focal position of the object that does not satisfy at least one of the condition that the object exists in the target region AR and the condition that the object performs the predetermined motion. The focal position controller 34 keeps adjusting the focal position on the object while the object on the focal position exists in the target region AR and continues the predetermined motion. On the other hand, in a case in which the object no longer satisfies at least one of the condition that the object exists in the target region AR and the condition that the object performs the predetermined motion, the focal position controller 34 removes the focal position from the object. Note that the motion of the object here refers to a moving mode of the object, and may refer to, for example, a moving direction and a moving speed of the object. For example, in a case in which the predetermined motion indicates that the object moves vertically downward at a speed of 10 m/h or more, the focal position controller 34 adjusts the focal position of the object moving vertically downward at a speed of 10 m/h or more in the target region AR. Note that the motion of the object is not limited to a motion indicating the moving direction and the moving speed of the object, and may indicate an arbitrary moving mode. For example, the motion of the object may refer to at least one of the moving direction and the moving speed of the object.

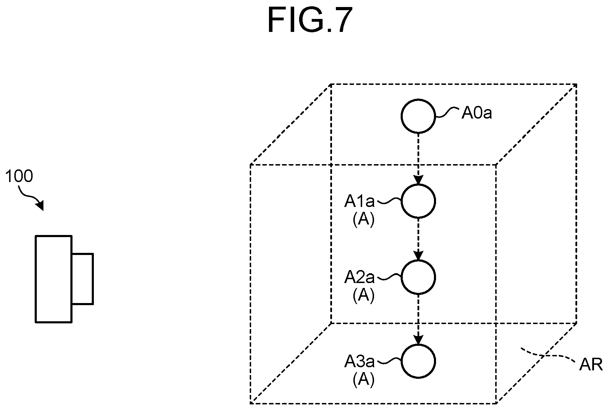

FIG. 7 is a schematic diagram illustrating an example of a case in which a motion of the object is set as a predetermined condition. In the example of FIG. 7, the predetermined condition is that the object moves vertically downward (in the direction opposite to the Z direction), that is, the moving direction of the object. Then, the example of FIG. 7 illustrates a case in which the object A moves vertically downward from the position A0a to the position A3a through the position A1a and the position A2a and stops at the position A3a. The position A0a is outside the target region AR, and the positions A1a, A2a, and A3a are inside the target region AR. In this case, since the object A is out of the target region AR at a timing when the object A exists at the position A0a, the focal position controller 34 does not adjust the focal position on the object A but, for example, adjusts the focal position on the preset setting position. Then, the focal position controller 34 adjusts the focal position on the object A at a timing when the object A exists at the position A1a, that is, at a timing when the object A enters the target region AR while moving vertically downward. The focal position controller 34 keeps adjusting the focal position on the object A even at a timing when the object A exists at the position A2a, and removes the focal position from the object A and returns the focal position to the preset setting position at a timing when the object A moves to the position A3a and stops.

Next, a case in which a shape of the object is set to a predetermined condition will be described. In this case, the focal position controller 34 determines whether the object has a predetermined shape based on the image data in which the object is captured. The focal position is adjusted on the object existing in the target region AR and having a predetermined shape. The focal position controller 34 does not adjust the focal position on the object that does not satisfy at least one of the condition that the object exists in the target region AR and the condition that the object has a predetermined shape. The focal position controller 34 keeps adjusting the focal position on the object while the object at the focal position has a predetermined shape and continues to exist in the target region AR. On the other hand, in a case in which the object no longer satisfies at least one of the condition that the object exists in the target region AR and the condition that the object has the predetermined shape, the focal position controller 34 removes the focal position from the object. The shape of the object here may be, for example, at least one of a size of the object or an outer shape of the object. For example, in a case in which the predetermined shape indicates a predetermined size or more, the focal position controller 34 adjusts the focal position on an object existing in the target region AR and having a predetermined size or more. Note that a 3D shape information acquired by the object information acquisition unit 32 may be used to acquire a shape information of the object.

A case in which the orientation of the object is set to a predetermined condition will be described. In this case, the focal position controller 34 determines whether the object is directed in a predetermined direction based on the image data in which the object is captured. The focal position is adjusted with respect to the object existing in the target region AR and facing the predetermined direction. The focal position controller 34 does not adjust the focal position on the object that does not satisfy at least one of the condition that the object exists in the target region AR and the condition that the object is directed in the predetermined direction. The focal position controller 34 keeps adjusting the focal position on the object during a period in which the object on the focal position is kept existing in the target region AR while facing the predetermined direction. On the other hand, in a case in which the object no longer satisfies at least one of the condition that the object exists in the target region AR and the condition that the object is directed in the predetermined direction, the focal position controller 34 removes the focal position from the object. Note that the information on the 3D shape acquired by the object information acquisition unit 32 may be used to acquire the information on the orientation of the object.

Note that the predetermined condition may be set by an arbitrary method, for example, may be set in advance. In this case, the focal position controller 34 may read information (for example, the moving direction and the moving speed) indicating a preset predetermined condition from the storage 22, or may acquire a predetermined condition from another device via the communication unit 20. Furthermore, for example, in a case in which a predetermined condition is not set in advance, the focal position controller 34 may automatically set a predetermined condition. Furthermore, for example, the user may set a predetermined condition. In this case, for example, the user may input information (for example, a moving direction and a moving speed) designating a predetermined condition to the input unit 16, and the focal position controller 34 may set a predetermined condition based on the information designated by the user.

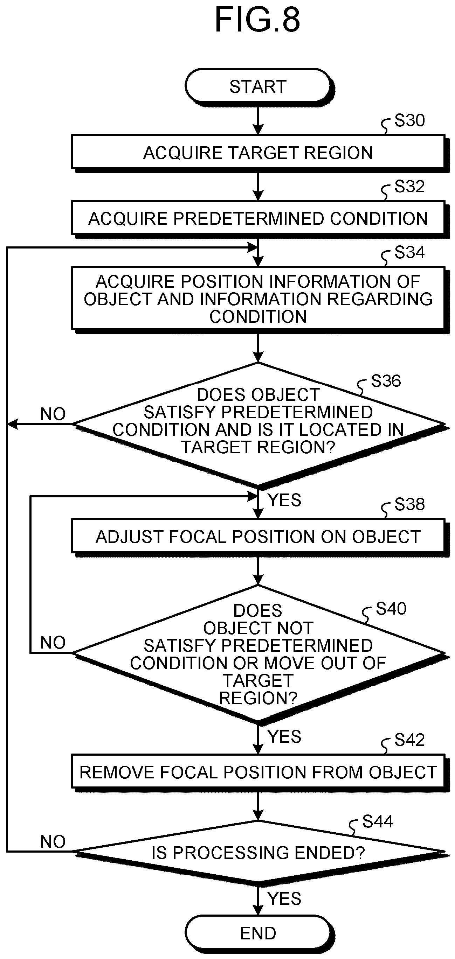

Next, a flow of adjusting a focal position in the second embodiment will be described. FIG. 8 is a flowchart for explaining a processing flow of adjusting a focal position in the second embodiment. As illustrated in FIG. 8, the controller 24 causes the target region acquisition unit 30 to acquire information of the target region AR (Step S30), causes the focal position controller 34 to acquire a predetermined condition (Step S32), and causes the object information acquisition unit 32 to acquire position information of the object and information regarding the condition (Step S34). The information regarding the condition is information for determining whether the object satisfies a predetermined condition, and indicates, for example, position information of the object, image data in which the object is captured, and the like. An execution order of Steps S30, S32, and S34 may be arbitrary. The controller 24 causes the focal position controller 34 to determine whether the object satisfies a predetermined condition and is located in the target region AR (Step S36). In a case in which at least one of a condition that the object satisfies the predetermined condition and a condition that the object is located in the target region AR is not satisfied (Step S36; No), the process returns to Step S12, and the acquisition of the position information of the object is continued. On the other hand, in a case in which the object satisfies the predetermined condition and is located in the target region AR (Step S36; Yes), the focal position controller 34 adjusts the focal position on the object (Step S38). Thereafter, the acquisition of the position information of the object and the information regarding the condition is continued, and it is determined whether the object does not satisfy the predetermined condition or moves out of the target region AR (Step S40). In a case in which the object satisfies the predetermined condition and is located in the target region AR (Step S40; No), that is, in a case in which the object continues to exist in the target region AR while satisfying the predetermined condition, the process returns to Step S38, and the focal position is continuously adjusted on the object. In a case in which at least one of the condition that the object satisfies the predetermined condition and the condition that the object is located in the target region AR is not satisfied (Step S40; Yes), the focal position controller 34 removes the focal position from the object (Step S42). Thereafter, in a case in which the processing is not ended (Step S44; No), the process returns to Step S34, and in a case in which the processing is ended (Step S44; Yes), this process ends.

As described above, in the second embodiment, the focal position controller 34 may adjust the focal position on the object existing in the target region AR and performing a predetermined motion. The focal position controller 34 keeps adjusting the focal position on the object during a period in which the object performs a predetermined motion, and removes the focal position from the object when the object no longer performs the predetermined motion. In this manner, in addition to being within the target region AR, satisfying a predetermined motion is also a condition for adjusting the focal position, whereby an object having a specific motion can be tracked and the focal position can be adjusted appropriately. For example, it is possible to detect a drop in the target region AR or the like.

In the second embodiment, the focal position controller 34 may adjust the focal position on the object existing in the target region AR and having a predetermined shape. As described above, in addition to being in the target region AR, by setting the predetermined shape as a condition for adjusting the focal position, it is possible to track an object having a specific shape and appropriately adjust the focal position.

In the second embodiment, the focal position controller 34 may adjust the focal position on the object existing in the target region AR and facing a predetermined direction. As described above, in addition to being in the target region AR, by setting the condition that the object faces a predetermined direction as the condition for adjusting the focal position, it is possible to track the object in a specific direction and appropriately adjust the focal position.

### (Third Embodiment)

Next, a third embodiment will be described. The third embodiment is different from the first embodiment in that how to adjust focal positions in a case in which multiple objects exists in the target region AR is defined. In the third embodiment, the description of portions having the same configuration as that of the first embodiment will be omitted. Note that the third embodiment is also applicable to the second embodiment.

The object information acquisition unit 32 causes the object position measurement unit 14 to measure a relative position of each object and acquires the position information of each object existing in the imaging region AR0. The focal position controller 34 determines whether each object is located in the target region AR based on the position information of each object. In a case of determining that multiple objects are located in the target region AR at the same timing, the focal position controller 34 switches the focal position so that the focal position is adjusted on each object existing in the target region AR. That is, the focal position controller 34 continues to adjust the focal position on one object existing in the target region AR for a predetermined time, and then switches to adjust the focal position on another object existing in the target region AR and continues to adjust the focal position on the another object for a predetermined time. The focal position controller 34 repeats this processing until the focal positions of all the objects existing in the target region AR are completely adjusted, and then, adjusts the focal position on the object whose focal position has been set first, and continues this processing. Note that since the focal position controller 34 continues to determine whether the object is located in the target region AR even during this processing, for example, the focal position is not adjusted on the object that no longer exists in the target region AR.

In the present embodiment, the focal position controller 34 sets an order of switching the focal position, that is, the object to be the target to which the focal position is to be adjusted next, based on the position information of each object existing in the target region AR. For example, the focal position controller 34 may set the order of switching the focal position so as to minimize a time required for switching the focal position. That is, since a movement amount of the optical element 10 for switching the focal position corresponds to a distance (an object distance) between the position of the switching source and the position of the switching destination, the time required for switching the focal position is determined according to the object distance, and the shorter the object distance, the shorter the time required for switching. Therefore, the focal position controller 34 sets the order of switching the focal position based on the position information of each object existing in the target region AR, that is, so as to minimize the object distance, in other words, so as to minimize the time required for switching the focal position.

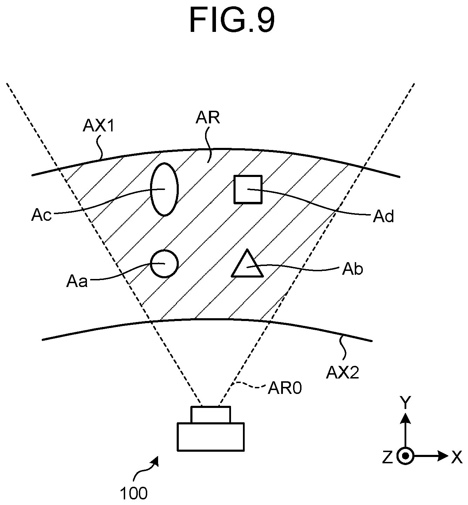

FIG. 9 is a schematic diagram illustrating an example in a case in which multiple objects exists in a target region. An example of setting the order of switching the focal position will be described with reference to FIG. 9. FIG. 9 illustrates an example in a case in which the objects Aa, Ab, Ac, and Ad continue to be located in the target region AR. For example, among the objects Aa, Ab, Ac, and Ad, an object having a shortest distance to the current focal position (for example, an object distance to a setting position) is defined as the object Aa. In this case, the focal position controller 34 switches the focal position to the object Aa having the shortest object distance to the current focal position, thereby minimizing the time required for switching the focal position. Next, among the objects Ab, Ac, and Ad whose focal positions have not been adjusted yet, an object having a minimum object distance from the object Aa is the object Ab. Therefore, the focal position controller 34 sets the object Ab having the minimum object distance as the next target, and switches the focal position from the object Aa to the object Ab, and thus minimizes the time required for switching the focal position. Next, among the objects Ac and Ad whose focal positions have not been adjusted yet, an object having a minimum object distance from the object Ab is the object Ad. Therefore, the focal position controller 34 sets the object Ad having the minimum object distance as the next target, and switches the focal position from the object Ab to the object Ad. Next, since the object Ac is the only object whose focal position has not been adjusted yet, the focal position controller 34 sets the object Ac as the next target, and switches the focal position from the object Ad to the object Ac. Thereafter, since there is no object whose focal position has not been set yet, the focal position is switched to the object Aa whose focal position has been set first, and the same processing is continued.

In this manner, the focal position controller 34 switches the focal position to the object having the minimum object distance among the objects on which the focal position has not been adjusted yet. Then, when there is no object whose focal position has not been adjusted yet, in other words, when the focal position is adjusted on all the objects, the focal position is adjusted on the object whose focal position has been adjusted earliest among the objects currently positioned in the target region AR. However, the method of setting the order of switching the focal positions is not limited to the above, and may be any method. For example, the focal position controller 34 may switch the focal position to the object having a maximum object distance, or may switch the focal position in descending order of a distance from the imaging device 100.

Note that the predetermined time that is a time for which the focal position is kept on one object may be arbitrarily set. For example, the predetermined time may be set to the same length for all objects, or the predetermined time may be different for each object. In this case, for example, the focal position controller 34 may assign an importance to each object based on at least one of the position information of the object and the image data of the object, and extend the predetermined time as the importance is higher. The method of assigning the importance may be arbitrary, but for example, the focal position controller 34 may set the importance of the object to be higher as the distance from the imaging device 100 is shorter, or may set the importance of the object to be higher as the speed of approaching the imaging device 100 is higher.

In addition, the focal position controller 34 may stop switching the focal position to another object and continue to adjust the focal position on one object during a period in which multiple objects exists in the target region AR. For example, in a case in which a command to stop the switching of the focal position (a command to fix the focal position on the object) is input to the input unit 16 by the user at a timing when the focal position is adjusted on a certain object, the focal position controller 34 stops the switching of the focal position to another object and continues to adjust the focal position on the object.

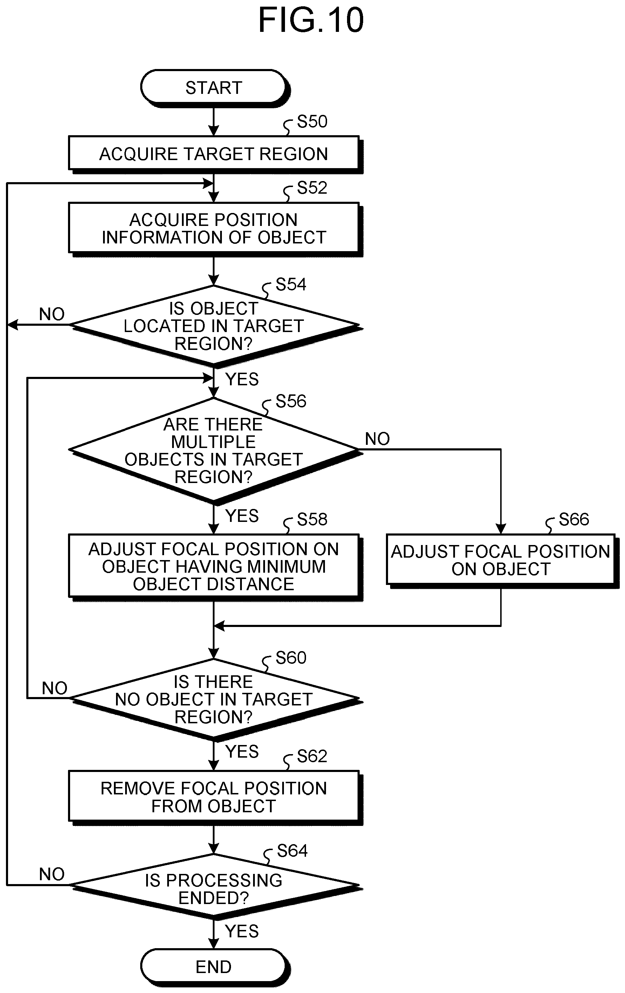

Next, a processing flow of adjusting the focal position described above will be described. FIG. 10 is a flowchart for explaining a processing flow of adjusting a focal position according to the third embodiment. As illustrated in FIG. 10, the controller 24 causes the target region acquisition unit 30 to acquire information of the target region AR (Step S50), and causes the object information acquisition unit 32 to acquire position information of the object (Step S52). An execution order of Steps S50 and S52 may be arbitrary. The controller 24 causes the focal position controller 34 to determine whether the object is located in the target region AR based on the position information of the object (Step S54). In a case in which the object is not located in the target region AR (Step S54; No), the process returns to Step S52, and the acquisition of the position information of the object is continued. On the other hand, in a case in which the object is located in the target region AR (Step S54; Yes), the focal position controller 34 determines whether there are multiple objects in the target region AR (Step S56). In a case in which there are multiple objects in the target region AR (Step S56; Yes), the focal position controller 34 adjusts the focal position on the object having the minimum object distance (Step S58). Thereafter, the acquisition of the position information of the object is continued, and it is determined whether there is no object in the target region AR (Step S60). In a case in which there is an object in the target region AR (Step S60; No), the process returns to Step S56, and the adjusting of the focal position is continued. In a case in which there is no object in the target region AR (Step S60; Yes), the focal position controller 34 removes the focal position from the object (Step S62), and in a case in which the processing is not ended (Step S64; No), the process returns to Step S52, and in a case in which the processing is ended (Step S64; Yes), this process ends.

On the other hand, in a case in which there are not multiple objects in the target region AR (Step S56; No), that is, in a case in which there is one object in the target region AR, the focal position is adjusted on the one object (Step S66). Thereafter, the acquisition of the position information of the object is continued, and it is determined whether there is no object in the target region AR (Step S60). In a case in which there is an object in the target region AR (Step S60; No), the process returns to Step S56, and the adjusting of the focal position is continued. In a case in which there is no object in the target region AR (Step S60; Yes), the focal position controller 34 removes the focal position from the object (Step S62), and in a case in which the processing is not ended (Step S64; No), the process returns to Step S52, and in a case in which the processing is ended (Step S64; Yes), this process ends.

As described above, in the third embodiment, in a case in which there are multiple objects in the target region AR, the focal position controller 34 switches the focal position so that the focal position is sequentially adjusted on each object. Therefore, even in a case in which there are multiple objects in the target region AR, the focal position can be adjusted appropriately.

The focal position controller 34 sets the order of switching the focal position according to the position of each object. Therefore, even in a case in which there are multiple objects in the target region AR, the focal position can be adjusted appropriately.

The focal position controller 34 sets the order of switching the focal position so that the time required for switching the focal position is minimized. Therefore, even in a case in which there are multiple objects in the target region AR, the focal position can be adjusted appropriately.

### (Fourth Embodiment)

Next, a fourth embodiment will be described. The fourth embodiment is different from the first embodiment in that the focal position is not adjusted on the object existing in the target region AR and the focal position is adjusted when the object is moved out of the target region AR. In the fourth embodiment, the description of portions having the same configuration as that of the first embodiment will be omitted. Note that the fourth embodiment is also applicable to the second embodiment and the third embodiment.

The method of adjusting the focal position in the fourth embodiment can be described by replacing "in the target region AR" with "out of the target region AR" in the description of the first embodiment. Hereinafter, a specific description will be given.

In the fourth embodiment, the focal position controller 34 adjusts the focal position on an object existing inside the imaging region AR0 and outside the target region AR, and does not adjust the focal position on an object existing inside the target region AR. During a period in which the object on the focal position exists inside the imaging region AR0 and outside the target region AR, the focal position controller 34 keeps adjusting the focal position on the object. On the other hand, in a case in which the object on the focal position does not exist inside the imaging region AR0 and outside the target region AR, that is, in a case in which the object is moved outside the imaging region AR0 or inside the target region AR, the focal position controller 34 removes the focal position from the object and focuses on a position other than the object.

More specifically, the focal position controller 34 preferably adjusts the focal position on an object that has moved from the inside of the target region AR to the outside of the target region AR in the imaging region AR0. As a result, for example, the focal position can be adjusted on an object moved from a specific region, which is preferable.

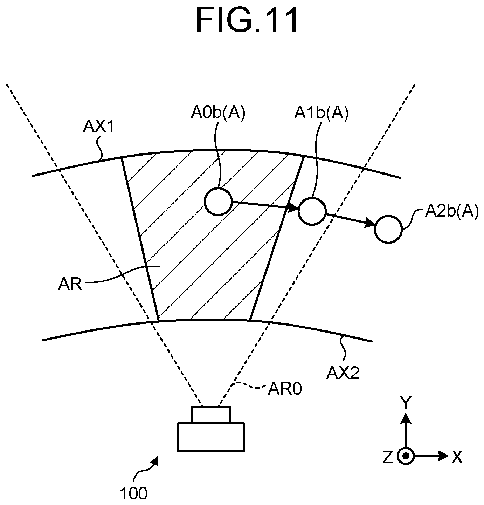

FIG. 11 is a schematic diagram for explaining a method of adjusting a focal position in the fourth embodiment. An example of adjusting the focal position described above will be described with reference to FIG. 11. FIG. 11 illustrates an example in a case in which the object A moves from the position A0b to the position A2b through the position A1b. The position A0b is inside the target region AR, the position A1b is inside the imaging region AR0 and outside the target region AR, and the position A2b is outside the imaging region AR0. In this case, the focal position controller 34 does not adjust the focal position on the object A at a timing when the object A exists at the position A0b, and adjusts the focal position on a preset setting position, for example. Then, the focal position controller 34 adjusts the focal position on the object A at a timing when the object A exists at the position A1b, that is, at a timing when the object A moves from the inside of the target region AR to the outside of the target region AR in the imaging region AR0. At a timing when the object A moves to the position A2b, that is, at a timing when the object A goes out of the imaging region AR0, the focal position controller 34 removes the focal position from the object A and returns the focal position to a preset setting position.

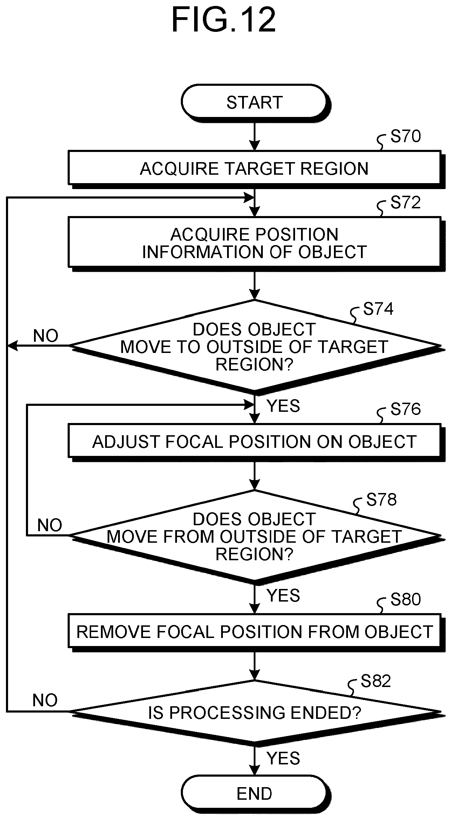

Next, a processing flow of adjusting the focal position described above will be described. FIG. 12 is a flowchart for explaining a processing flow of adjusting a focal position according to the fourth embodiment. As illustrated in FIG. 12, the controller 24 causes the target region acquisition unit 30 to acquire information of the target region AR (Step S70), and causes the object information acquisition unit 32 to acquire position information of the object (Step S72). An execution order of Steps S70 and S72 may be arbitrary. The controller 24 causes the focal position controller 34 to determine whether the object existing in the target region AR has moved to the outside of the target region AR in the imaging region AR0 based on the position information of the object (Step S74). In a case in which the object has not moved out of the target region AR (Step S74; No), that is, in a case in which the object continues to exist in the target region AR, the process returns to Step S72 to continue the acquisition of the position information of the object. On the other hand, in a case in which the object has moved to the outside of the target region AR in the imaging region AR0 (Step S74; Yes), the focal position controller 34 adjusts the focal position on the object (Step S76). Thereafter, the acquisition of the position information of the object is continued, and in a case in which the object is within the imaging region AR0 and does not move from the outside of the target region AR (Step S78; No), that is, in a case in which the object continues to stay inside the imaging region AR0 and outside the target region AR, the process returns to Step S76 and continues to adjust the focal position on the object. On the other hand, in a case in which the object is within the imaging region AR0 and moved from the outside of the target region AR (Step S78; Yes), that is, in a case in which the object moves out of the imaging region AR0 or into the target region AR, the focal position controller 34 removes the focal position from the object (Step S80). If the processing is not to be ended (Step S82; No), the process returns to Step S72, and in a case in which the processing is ended (Step S82; Yes), this process ends.

As described above, the imaging device 100 according to the fourth embodiment includes the imaging element 12, the object information acquisition unit 32 that acquires the position information of the object existing in the imaging region AR0 of the imaging element 12, and the focal position controller 34 that controls the focal position of the imaging device 100. The focal position controller 34 adjusts the focal position on an object that is outside the target region AR and exists in the imaging region AR0, continues to adjust the focal position on the object during a period in which the object is outside the target region AR and exists in the imaging region AR0, and removes the focal position from the object when the object moves into the target region AR. The target region AR is a region between a first position AX1 at which a distance from the imaging device 100 is a first distance L1 and a second position AX at which a distance from the imaging device 100 is a second distance L2 shorter than the first distance L1.

Here, in an autofocus imaging device, it is required to adjust a focal position appropriately. For that, the imaging device 100 according to the present embodiment adjusts the focal position on the object existing outside the target region AR, and continues to adjust the focal position on the object in a case in which the object continues to exist outside the target region AR. Therefore, for example, it is possible to continue to focus on an object that has come out of a target region that is a remarkable region. Therefore, according to the present embodiment, the focal position can be adjusted appropriately.

### (Fifth Embodiment)

### (Configuration of Imaging Device)

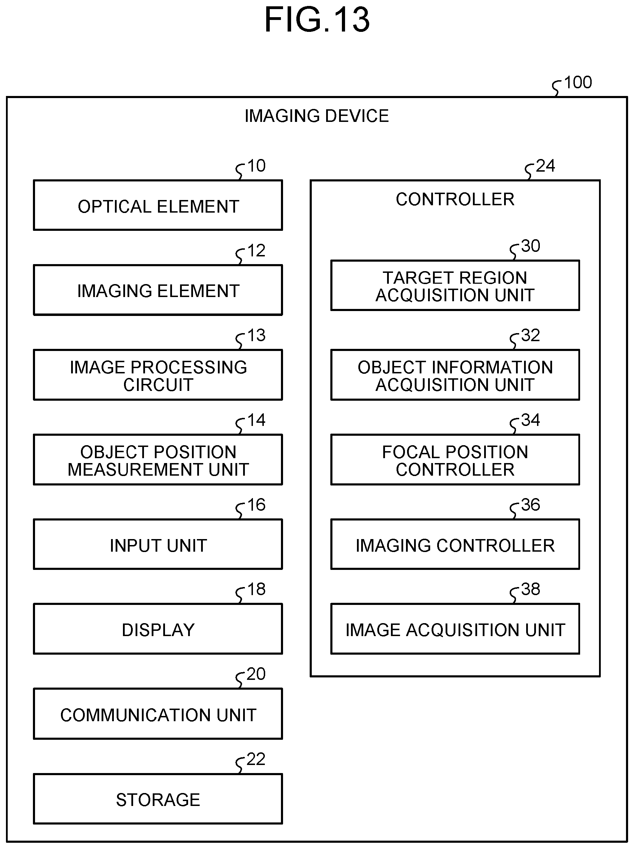

FIG. 13 is a schematic block diagram of an imaging device according to a fifth embodiment. An imaging device 100 according to the fifth embodiment is an imaging device that images an object within an imaging range. The imaging device 100 is an autofocus camera capable of adjusting a focal position automatically. The imaging device 100 may be a video camera that captures a moving image by capturing an image for each predetermined frame, or may be a camera that captures a still image. The imaging device 100 may be used for any purpose, and for example, may be used as a monitoring camera provided at a predetermined position in facilities or outdoors.

As illustrated in FIG. 13, the imaging device 100 includes an optical element 10, an imaging element 12, an image processing circuit 13, an object position measurement unit 14, an input unit 16, a display 18, a communication unit 20, a storage 22, and a controller 24.

The optical element 10 is, for example, an element of an optical system such as a lens. The number of optical elements 10 may be one or plural.

The imaging element 12 is an element that converts light incident through the optical element 10 into an image signal that is an electric signal. The imaging element 12 is, for example, a charge coupled device (CCD) sensor, a complementary metal oxide semiconductor (CMOS) sensor, or the like.

The image processing circuit 13 generates image data for each frame from the image signal generated by the imaging element 12. The image data is, for example, data including information of luminance and color of each pixel in one frame, and may be data to which gradation for each pixel is assigned.

The object position measurement unit 14 is a sensor that measures a position of an object to be measured with respect to the imaging device 100 (a relative position of the object). The object here may be any object, and may be a living thing or an inanimate object, and it similarly applies to following descriptions. In addition, the object here may refer to a movable object, but is not limited thereto, and may refer to an object that does not move.

In the present embodiment, the object position measurement unit 14 measures the distance from the imaging device 100 to the object as the relative position of the object. The object position measurement unit 14 may be any sensor capable of measuring the relative position of the object, and may be, for example, a time of flight (TOF) sensor. In a case in which the object position measurement unit 14 is a TOF sensor, for example, a light emitting element (for example, a light emitting diode (LED) that emits light and a light receiving unit that receives light are provided, and the distance to the object is measured by a flight time of the light emitted from the light emitting element to the object and returned to the light receiving unit. Note that, in addition to measuring the distance from the imaging device 100 to the object as the relative position of the object, the object position measurement unit 14 may also measure, for example, a direction in which the object exists with respect to the imaging device 100. In other words, the object position measurement unit 14 may measure, as the relative position of the object, the position (coordinates) of the object in the coordinate system in which the imaging device 100 is set as an origin.

The input unit 16 is a mechanism that receives an input (operation) from a user, and may be, for example, a button, a keyboard, a touch panel, or the like.

The display 18 is a display panel that displays an image. In addition to the image captured by the imaging device 100, the display 18 may be capable of displaying an image for the user to set a target region AR described later.

The communication unit 20 is a communication module that communicates with an external device, and may be, for example, an antenna, a Wi-Fi (registered trademark) module, or the like. Although the imaging device 100 communicates with an external device by wireless communication, wired communication may be used, and a communication method may be arbitrary.

The storage 22 is a memory that stores captured image data and various types of information such as calculation contents and programs of the controller 24, and includes at least one of, for example, a random access memory (RAM), a main storage device such as a read only memory (ROM), or an external storage device such as a hard disk drive (HDD). The program for the controller 24 stored in the storage 22 may be stored in a recording medium readable by the imaging device 100.

The controller 24 is an arithmetic device, and includes, for example, an arithmetic circuit such as a central processing unit (CPU). The controller 24 includes a target region acquisition unit 30, an object information acquisition unit 32, a focal position controller 34, an imaging controller 36, and an image acquisition unit 38. The controller 24 reads and executes a program (software) from the storage 22 to implement the target region acquisition unit 30, the object information acquisition unit 32, the focal position controller 34, the imaging controller 36, and the image acquisition unit 38, and executes these processes. Note that the controller 24 may execute these processes by one CPU, or may include multiple CPUs and execute the processes by the multiple CPUs. In addition, at least a part of the processing of the target region acquisition unit 30, the object information acquisition unit 32, the focal position controller 34, the imaging controller 36, and the image acquisition unit 38 may be implemented by a hardware circuit.

### (Target Region Acquisition Unit)

The target region acquisition unit 30 acquires information of multiple target regions AR set in the imaging region of the imaging device 100. The target region AR is a region set to adjust the focal position automatically. The information of the target region AR is information indicating a position of the target region AR, that is, position information of the target region AR. It is preferable that the multiple target regions AR are located at different positions and are set so as not to overlap each other.

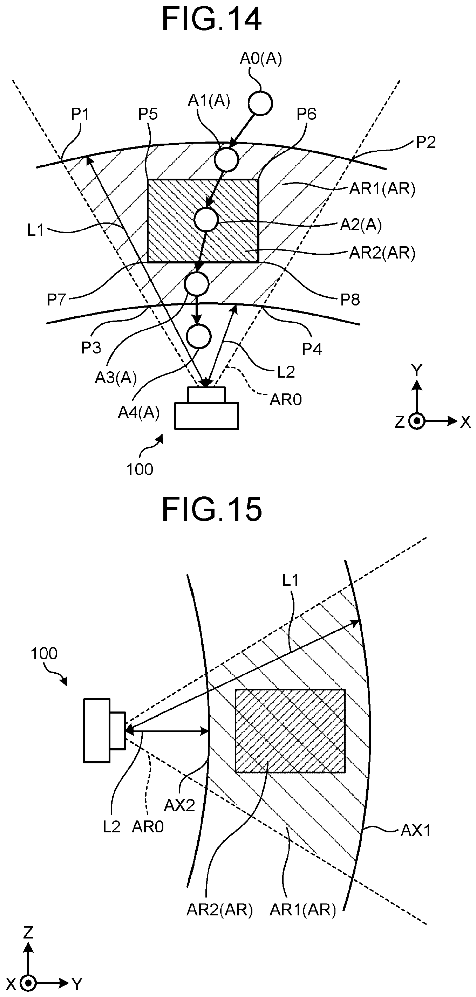

FIGS. 14 and 15 are schematic diagrams for explaining an example of a target region. FIG. 14 is a diagram of the imaging device 100 and the target region AR as viewed from above in a vertical direction, and FIG. 15 is a diagram of the imaging device 100 and the target region AR as viewed from a horizontal direction. Hereinafter, the direction Z is a vertical direction, the direction X is one direction of a horizontal direction orthogonal to the direction Z, and the direction Y is a direction (horizontal direction) orthogonal to the direction Z and the direction X. As illustrated in FIGS. 14 and 15, a range in which an image can be captured by the imaging device 100 is defined as an imaging region AR0. The imaging region AR0 refers to a region (space) within an angle of view of the imaging element 12, in other words, a range that can be captured as an image in the real space. The target region AR is a region (space) set within the range of the imaging region AR0.

More specifically, each target region AR is a region between a first position AX1 and a second position AX2 in the imaging region AR0. The first position AX1 is a position where a distance from the imaging device 100 is a first distance L1, and the second position AX2 is a position where a distance from the imaging device 100 is a second distance L2 shorter than the first distance L1. As illustrated in FIGS. 14 and 15, in the present embodiment, the first position AX1 can be said to be a virtual plane including each position (coordinate) where the distance from the imaging device 100 is the first distance L1 in the imaging region AR0. Similarly, the second position AX2 can be said to be a virtual plane including each position (coordinate) at which the distance from the imaging device 100 is the second distance L2 in the imaging region AR0. That is, each target region AR can be said to be a space existed in a region surrounded by a virtual plane whose distance from the imaging device 100 is the second distance L2 and a virtual plane whose distance from the imaging device 100 is the first distance L1 in the imaging region AR0. Note that the first position AX1 is not limited to a virtual plane in which all positions (coordinates) included in the first position AX1 become the first distance L1 from the imaging device 100, and may be a virtual plane in which at least some positions (coordinates) included in the first position AX1 become the first distance L1 from the imaging device 100. Similarly, the second position AX2 may be a virtual plane in which at least a part of the position (coordinates) included in the second position AX2 is a second distance L2 from the imaging device 100.

In FIGS. 14 and 15, a case in which a first target region AR1 and a second target region AR2 are set as the target region AR is taken as an example. In the examples of FIGS. 14 and 15, the first target region AR1 and the second target region AR2 are located between the first position AX1 and the second position AX2 in the imaging region AR0. In the examples of FIGS. 14 and 15, the region between the first position AX1 and the second position AX2 in the imaging region AR0 is divided into the first target region AR1 and the second target region AR2. In other words, here, an entire region between the first position AX1 and the second position AX2 is divided into multiple target regions. In the examples of FIGS. 14 and 15, the second target region AR2 is located so as to be surrounded by the first target region AR1.

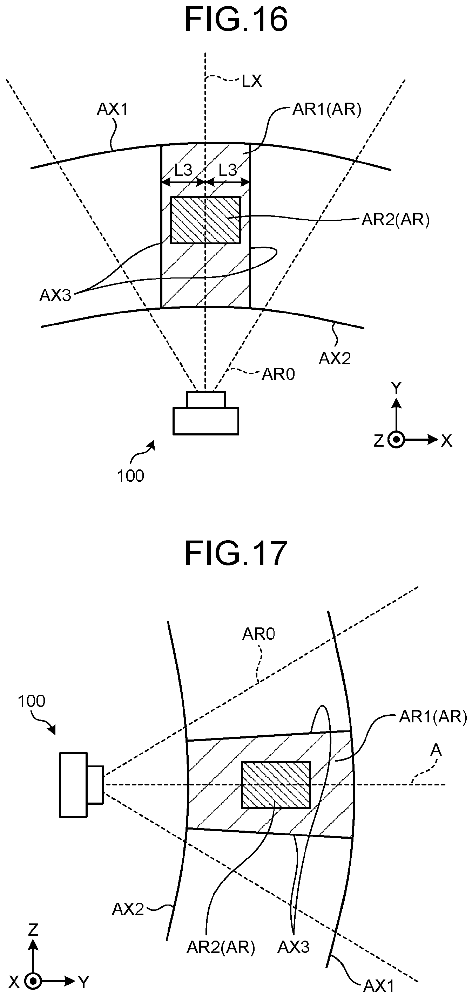

FIGS. 16 and 17 are schematic diagrams illustrating another example of the target region. In the description of FIGS. 14 and 15, the first target region AR1 is divided by the first position AX1 and the second position AX2 with respect to the imaging region AR0 in the optical axis direction (depth direction of the image) of the imaging device 100, but is not divided with respect to the imaging region AR0 in a radiation direction (a spread direction of an angle of view) with respect to the optical axis direction of the imaging device 100. In other words, end surfaces in the direction in which the angle of view of the first target region AR1 spreads coincide with end surfaces in the direction in which the angle of view of the imaging region AR0 spreads. However, the present invention is not limited thereto, and the first target region AR1 may also be divided with respect to the imaging region AR0 in the direction in which the angle of view spreads. That is, for example, as illustrated in FIGS. 16 and 17, the first target region AR1 may also be divided with respect to the imaging region AR0 in the spread direction of the angle of view by a third position AX3. In this example, the third position AX3 is a virtual surface (here, a closed curved surface having a side surface shape of a cylinder) including positions (coordinate) radially outward and away from the optical axis LX of the imaging device 100 by a predetermined distance. In this case, the first target region AR1 is a region (space) surrounded by the first position AX1, the second position AX2, and the third position AX3. Note that the third position AX3 is not limited to a virtual plane in which all positions (coordinates) included in the third position AX3 become the third distance L3 from the optical axis LX, and may be a virtual plane in which at least some positions (coordinates) included in the third position AX3 become the third distance L3 from the optical axis LX. For example, the third position AX3 may be a virtual plane that expands radially outward (in a horizontal direction and an elevation angle direction) at a predetermined angle as the distance from the imaging device 100 increases along the optical axis direction.

Note that the position of each target region AR is not limited to the above description, and may be arranged at any position between the first position AX1 and the second position AX2 in the imaging region AR0. For example, the second target region AR2 may not be positioned so as to be surrounded by the first target region AR1. A size and a shape of the target region AR are not limited to the above description and may be arbitrary. In addition, the number of target regions AR is not limited to two, and multiple target regions AR such as three or more target regions AR may be set. Furthermore, in the above description, the target region AR is a region set in the imaging region AR0, but the present invention is not limited thereto. For example, when a range that can be measured by the object position measurement unit 14 is a distance measurement region (a distance measurement space), the target region AR may be a region set in the distance measurement region. In this case, the imaging region AR0 in FIGS. 14 to 17 may be treated as a distance measurement region.

The target region acquisition unit 30 may acquire the information of the target region AR by an arbitrary method. For example, the position of each target region AR may be set in advance. In this case, the target region acquisition unit 30 may read the position information of each preset target region AR from the storage 22, or may acquire the position information of each target region AR from another device via the communication unit 20. Furthermore, for example, in a case in which the position of the target region AR is not set in advance, the target region acquisition unit 30 may set the position of each target region AR automatically. Furthermore, for example, the user may set the position of each target region AR. In this case, for example, the user may input information (for example, values of the first distance L1, the second distance L2, and the third distance L3, and the like) designating the position of each target region AR to the input unit 16, and the target region acquisition unit 30 may set each target region AR based on the position information of the target region AR designated by the user. Furthermore, for example, the target region AR may be set by designating coordinates. That is, for example, in the example of FIG. 14, the coordinates P1, P2, P3, and P4 to be vertex positions of the first target region AR1 and the coordinates P5, P6, P7, and P8 to be vertex positions of the second target region AR2 may be designated. A region surrounded by the coordinates P5 to P8 may be set as the second target region AR2, and a region that is outside the second target region AR2 and surrounded by the coordinates P1 to P4 may be set as the first target region AR1.

### (Object Information Acquisition Unit)

The object information acquisition unit 32 acquires position information of an object existing in an imaging region AR0. The object information acquisition unit 32 controls the object position measurement unit 14 to cause the object position measurement unit 14 to measure the relative position of the object with respect to the imaging device 100. The object information acquisition unit 32 acquires a measurement result of the relative position of the object with respect to the imaging device 100 by the object position measurement unit 14 as position information of the object. The object information acquisition unit 32 sequentially acquires the position information of the object by acquiring the position information of the object every predetermined time. Furthermore, the object information acquisition unit 32 can also acquire information indicating a shape of the object (for example, a 3D shape of the object) based on the position information of the object. For example, the object information acquisition unit 32 can acquire the 3D shape of the object by accumulating multiple pieces of position information such as TOF image information.

### (Focal Position Controller)

The focal position controller 34 sets a focal position of the imaging device 100. The focal position controller 34 controls the focal position by controlling a position of the optical element 10, that is, by moving the position of the optical element 10.

For each target region AR, the focal position controller 34 adjusts the focal position on an object existing in the target region AR. In other words, the focal position controller 34 adjusts the focal position on the position of the object determined to exist in the target region AR. In the present embodiment, the focal position controller 34 determines whether the object exists in the target region AR based on the position information of the object acquired by the object information acquisition unit 32. In a case in which the position of the object acquired by the object information acquisition unit 32 overlaps with the position of the target region AR, the focal position controller 34 determines that the object exists in the target region AR and adjusts the focal position on the position of the object acquired by the object information acquisition unit 32. In the examples of FIGS. 14 and 15, since the first target region AR1 and the second target region AR2 are set as the target region AR, the focal position controller 34 adjusts the focal position on the object in the first target region AR1 in a case in which the object exists in the first target region AR1, and adjusts the focal position on the object in the second target region AR2 in a case in which the object exists in the second target region AR2.

The focal position controller 34 keeps adjusting the focal position on the object during a period in which the object at the focal position exists in the target region AR. That is, the focal position controller 34 determines whether or not the object continues to exist in the target region AR based on the position information of the object at every predetermined time acquired by the object information acquisition unit 32, and keeps adjusting the focal position on the object during a period in which the object continues to exist in the target region AR. On the other hand, in a case in which the object on the focal position moves out of the target region AR, that is, in a case in which the object no longer exists in the target region AR, the focal position controller 34 takes the focal position out of the object and focuses on a position other than the object. In a case in which the focal position is adjusted on the object in the first target region AR1, for example, the focal position controller 34 keeps adjusting the focal position on the object during a period in which the object continues to exist in the first target region AR1, and removes the focal position from the object in a case in which the object moves out of the first target region AR1. However, in a case in which the object is directly moved from the first target region AR1 into the second target region AR2 (that is, in a case in which the object moves from the first target region AR1 to the second target region AR2 without going out of the range of the first target region AR1 and the second target region AR2), the focal position may be continuously adjusted on the object moved to the second target region AR2.

Note that the focal position controller 34 may not set the focal position of the object existing in the target region AR from the start of operation of the imaging device 100 (a timing at which the imaging becomes possible). That is, the focal position controller 34 may set the focal position of the object entering the target region AR after starting the operation. In other words, the focal position controller 34 may set the focal position of an object from a timing at which the object starts to exist in the target region AR for the object that exists in the target region AR at a certain timing but does not exist in the target region AR at a timing before the certain timing. In other words, in a case in which the object moves from the outside of the target region AR into the target region AR, the object may be recognized as a target on which the focal position controller 34 focuses. That is, the focal position controller 34 may set the focal position of the object moved from the outside of the target region AR into the target region AR.

Furthermore, in a case in which there is no object in the target region AR, the focal position controller 34 may set the focal position to a preset setting position. The preset setting position may be arbitrarily set, but is preferably set in the target region AR such as a center position of the target region AR.

In the present embodiment, in a case in which an object exists in a partial target region AR of each target region AR, the imaging device 100 is caused to execute predetermined processing while adjusting the focal position on the object. On the other hand, for another part of the target regions AR, in a case in which an object exists in the target region AR, the focal position is adjusted on the object, but the imaging device 100 is not caused to execute predetermined processing. The predetermined processing in the present embodiment refers to processing of capturing an image by the imaging controller 36. That is, in the present embodiment, in a case in which an object exists in a partial target region AR of each target region AR, the imaging controller 36 captures an image while the focal position controller 34 adjusts the focal position on the object. That is, in this case, the imaging controller 36 captures an image in a state in which the focal position is adjusted on the object. On the other hand, for another part of the target regions AR, in a case in which an object exists in the target region AR, the focal position controller 34 adjusts the focal position on the object, but the imaging controller 36 does not capture an image.

Note that, in a case in which the image in the imaging region AR0 is displayed on the display unit 18 in real time, it can be said that the imaging device 100 constantly captures an image. However, in a case in which the image is not being recorded, the image is temporarily stored in a buffer or the like, and then is automatically erased without being stored in the storage 22. The "image capturing" in the present embodiment does not refer to such capturing of an image that is automatically erased without being stored in the storage 22, but refers to capturing of an image that is automatically stored in the storage 22, in other words, capturing an image for recording and storing the captured image in the storage 22.

An example of setting the focal position described above will be described with reference to FIG. 14. FIG. 14 exemplifies a case where the predetermined processing is not executed in a case in which the object is located in the first target region AR1, and the predetermined processing is executed in a case in which the object is located in the second target region AR2. Furthermore, FIG. 14 illustrates an example in a case in which the object A is moving from the position A0 to the position A4 through the position A1, the position A2, and the position A3 toward the imaging device 100. At the position A0, the distance to the imaging device 100 is longer than the first distance L1 and is out of the range of the first target region AR1 and the second target region AR2. The position A1 is within the range of the first target region AR1, the position A2 is within the range of the second target region AR2, and the position A3 is within the range of the first target region AR1. In addition, the distance from the imaging device 100 to the position A4 is shorter than the second distance L2 and is out of the range of the first target region AR1 and the second target region AR2.

At a timing when the object A exists at the position A0, the focal position controller 34 does not adjust the focal position on the object A, but adjusts the focal position on a preset setting position, for example. Furthermore, at this timing, the imaging controller 36 does not capture an image. Then, the focal position controller 34 adjusts the focal position on the object A at a timing when the object A exists at the position A1, that is, at a timing when the object A enters the first target region AR1. The focal position controller 34 keeps adjusting the focal position on the object A while the object A continues to exist in the first target region AR1. In addition, the imaging controller 36 does not capture an image during a period in which the object A continues to exist in the first target region AR1. Then, the focal position controller 34 keeps adjusting the focal position on the object A at a timing when the object A exists at the position A2, that is, at a timing when the object A directly moves from the first target region AR1 to the second target region AR2. The focal position controller 34 keeps adjusting the focal position on the object A while the object A continues to exist in the second target region AR2. On the other hand, the imaging controller 36 starts image capturing at a timing when the object A enters the second target region AR2, and continues imaging during a period in which the object A continues to exist in the second target region AR2.

Thereafter, even at a timing when the object A exists at the position A3, that is, at a timing when the object A directly moves from the second target region AR2 to the first target region AR1, the focal position of the object A is continuously adjusted. The focal position controller 34 keeps adjusting the focal position on the object A while the object A continues to exist in the first target region AR1. On the other hand, the imaging controller 36 stops the image capturing at a timing of the movement from the second target region AR2 to the first target region AR1. The imaging controller 36 continues to stop imaging during a period in which the object A continues to exist in the first target region AR1. Thereafter, at a timing when the object A exists at the position A4, that is, at a timing when the object A moves from the first target region AR1 to the outside of the range of the first target region AR1 and the second target region AR2, the focal position is removed from the object A, and the focal position is returned to the preset setting position. That is, the focal position controller 34 adjusts the focal position on the object A from a timing at which the object A enters the target region AR, moves the focal position to the moving object A while the object A moves in the target region AR, and removes the focal position from the object A at a timing at which the object A moves out of the target region AR. The imaging controller 36 continues to capture an image in a case in which the object A is located in the second target region AR2, and does not capture an image in a case in which the object A is located outside the second target region AR2.

In the above description, the image capturing is predetermined processing (processing in a case in which an object exists in the second target region AR2), but the predetermined processing is not limited to the image capturing. The predetermined processing may be any processing other than the processing of adjusting the focal position on the object, and may be, for example, at least one of processing of capturing an image, processing of irradiating the object with light (for example, processing of irradiating the object with illumination light), or processing of outputting information indicating that the object exists in the second target region AR2 (for example, audio output processing). In addition, multiple predetermined processes may be set, and in this case, for example, in a case in which an object exists in the second target region AR2, all of the multiple predetermined processes may be executed. Furthermore, in a case in which three or more target regions AR are set, different predetermined processing may be assigned to each target region AR. That is, for example, in a case in which the first target region, the second target region, and the third target region are set, the predetermined processing may not be executed in a case in which an object exists in the first target region, the first predetermined processing may be executed in a case in which an object exists in the second target region, and the second predetermined processing different from the first predetermined processing may be executed in a case in which an object exists in the third target region.

In addition, the focal position may be set by the user. In this case, for example, an auto mode in which the focal position is automatically adjusted and a manual mode in which the focal position is adjusted by the user may be switchable. Then, in a case of the auto mode, the focal position is adjusted by the focal position controller 34 as described above. On the other hand, in a case of the manual mode, the user inputs an operation of adjusting the focal position to the input unit 16, and the focal position controller 34 adjusts the focal position according to the user's operation.

Furthermore, the image capturing may be executed by the user. In this case, for example, an auto mode in which an image is automatically captured and a manual mode in which an image is captured by a user's operation may be switchable. Then, in a case of the auto mode, the imaging controller 36 captures an image during a period in which the object A exists in the second target region AR2 as described above. On the other hand, in a case of the manual mode, the user inputs an operation for imaging to the input unit 16, and the imaging controller 36 captures an image according to the operation of the user.

### (Imaging Controller)

The imaging controller 36 controls imaging by the imaging device 100, and causes an image to be captured as described above. The imaging controller 36 controls, for example, the imaging element 12 to cause the imaging element 12 to acquire an image signal. For example, the imaging controller 36 may cause the imaging element 12 to automatically acquire the image signal, or may cause the imaging element to acquire the image signal according to a user's operation.

### (Image Acquisition Unit)

The image acquisition unit 38 acquires image data acquired by the imaging element 12. For example, the image acquisition unit 38 controls the image processing circuit 13 to cause the image processing circuit 13 to generate image data from the image signal generated by the imaging element 12, and acquires the image data. The image acquisition unit 38 stores the image data in the storage 22.

### (Flow of Adjusting Focal Position)

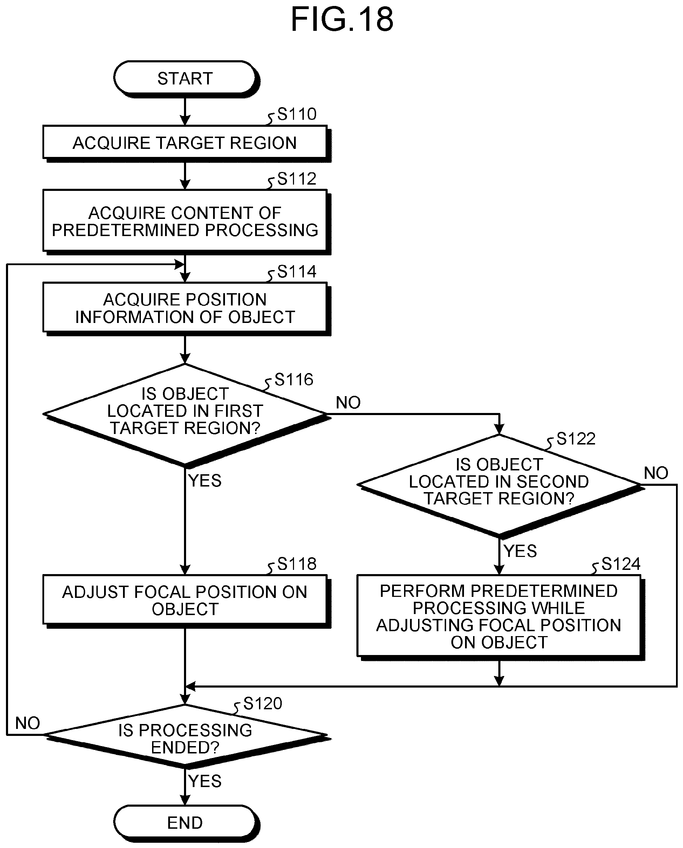

Next, a processing flow of adjusting the focal position described above will be described. FIG. 18 is a flowchart for explaining a processing flow of adjusting a focal position. As illustrated in FIG. 18, the controller 24 causes the target region acquisition unit 30 to acquire information of the target region AR (Step S110) and to acquire a content of predetermined processing (Step S112). The content of the predetermined processing is information indicating the target region AR for which a predetermined processing is executed among multiple target regions AR (that is, information indicating which target region AR is a target region for which the predetermined processing is executed) and information indicating a content of the predetermined processing (for example, image capturing or the like). The content of the predetermined processing may be set in advance or may be designated by the user. Here, the description will be continued assuming that the second target region AR2 is a target region AR for which predetermined processing is executed and the predetermined processing is processing of capturing an image.

The controller 24 causes the object information acquisition unit 32 to acquire the position information of the object (Step S114). An execution order of Steps S110, S112, and S114 may be arbitrary. The controller 24 causes the focal position controller 34 to determine whether the object is located in the first target region AR1 based on the position information of the object (Step S116). In a case in which the object is located in the first target region AR1 (Step S116; Yes), the focal position controller 34 adjusts the focal position on the object (Step S118), but the predetermined processing (here, image capturing) is not executed. Thereafter, in a case in which the processing is ended (Step S120; Yes), this process ends, and in a case in which the processing is not ended (Step S120; No), the process returns to Step S114 and continues. On the other hand, in a case in which the object is not located in the first target region AR1 (Step S116; No), and the object is not located in the second target region AR2 (Step S122; No), the process proceeds to Step S120 without adjusting the focal position or executing predetermined processing. On the other hand, in a case in which the object is located in the second target region AR2 (Step S122; Yes), while the focal position controller 34 adjusts the focal position on the object, the imaging controller 36 executes the predetermined processing (here, image capturing) (Step S124). Thereafter, the process proceeds to Step S120.

Note that the processing of executing the predetermined processing on a part of the target region AR (here, the second target region AR2) as described above is not essential. The imaging device 100 is only required to set multiple target regions AR and perform control to adjust, in each target region AR, the focal position on an object existing in the target region AR for each target region AR.

### (Effects)

As described above, the imaging device 100 according to the present embodiment includes the imaging element 12, the object information acquisition unit 32 that acquires the position information of the object existing in the imaging region AR0 of the imaging element 12, the target region acquisition unit 30 that acquires the position information of multiple target regions AR, and the focal position controller 34 that controls the focal position of the imaging device 100. Multiple target regions AR are located between a first position AX1 at which a distance from the imaging device 100 is a first distance L1 and a second position AX2 at which a distance from the imaging device 100 is a second distance L2 shorter than the first distance L1. For each target region AR, in a case in which an object exists in the target region AR, the focal position controller 34 adjusts the focal position on the object.

Here, in an autofocus imaging device, it is required to adjust a focal position appropriately. For that, the imaging device 100 according to the present embodiment sets multiple target regions AR, and in a case in which an object exists in any of the target regions AR, adjusts the focal position on the object. Therefore, for example, even in a case in which there is multiple remarkable regions in monitoring or the like, it is possible to focus on an object existing in each region. Therefore, according to the present embodiment, the focal position can be adjusted appropriately.

In addition, in the present embodiment, at least a first target region AR1 and a second target region AR2 are set as multiple target regions AR. In a case in which the object exists in the second target region AR2, the controller 24 causes the imaging device 100 to execute predetermined processing while adjusting the focal position of the object. On the other hand, in a case in which the object exists in the first target region AR1, the controller 24 does not execute the predetermined processing while adjusting the focal position on the object. According to the present embodiment, since the region is divided into a region where the predetermined processing is executed while the focal position is adjusted and a region where the focal position is adjusted but the predetermined processing is not executed, imaging or the like can be executed appropriately.

Furthermore, in the present embodiment, the predetermined processing is at least one of processing of imaging an object, processing of irradiating the object with light, or processing of outputting information indicating that an object exists in the second target region AR2. In a case in which the object exists in the second target region AR2, the imaging and the like can be executed appropriately by executing these processes.

### (Sixth Embodiment)

Next, a sixth embodiment will be described. The sixth embodiment is different from the fifth embodiment in that objects exist in different target regions AR at the same timing. In the sixth embodiment, the description of portions having the same configuration as that of the fifth embodiment will be omitted.

The object information acquisition unit 32 causes the object position measurement unit 14 to measure the relative position of each object and acquires the position information of each object existing in the imaging region AR0. The focal position controller 34 determines whether each object is located in the target region AR based on the position information of each object. In a case of determining that the object is positioned in each of the different target regions AR at the same timing, the focal position controller 34 adjusts the focal position based on a priority information. The priority information is information indicating a prioritized target region AR among the target regions AR, and is acquired by the target region acquisition unit 30. The priority information may be, for example, information indicating a priority order of each target region AR.

The target region acquisition unit 30 may acquire the priority information by an arbitrary method. For example, the priority information may be preset. In this case, the target region acquisition unit 30 may read the preset priority information from the storage 22, or may acquire the priority information from another device via the communication unit 20. Furthermore, for example, in a case in which the priority information is not set in advance, the target region acquisition unit 30 may set the priority information automatically. Furthermore, for example, the user may set the priority information. In this case, for example, the user inputs information designating the priority information (for example, the priority order for each target region AR) to the input unit 16, and the target region acquisition unit 30 acquires the priority information by the user.

Based on the priority information, the focal position controller 34 adjusts the focal position such that the focal position on the object located in the prioritized target region AR is prioritized over the focal position on the objects located in the target regions AR other than the prioritized target region AR. In other words, the focal position controller 34 adjusts the focal position such that adjusting the focal position on the object located in the target region AR having a higher priority order prioritizes over adjusting the focal position on the objects located in the target regions AR having a lower priority order. Hereinafter, a specific example of how to adjust the focal position based on the priority information will be described.

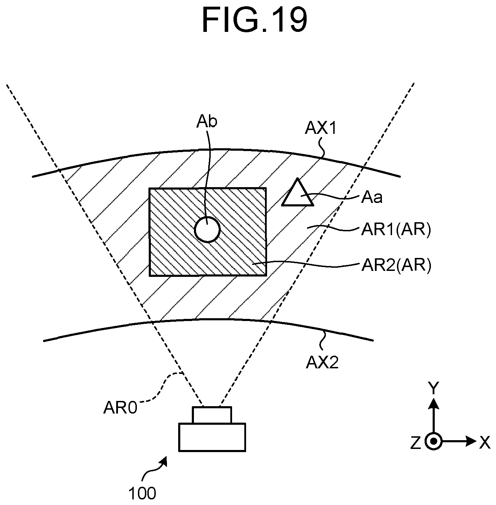

FIG. 19 is a schematic diagram for explaining adjusting of a focal position in the sixth embodiment. For example, the focal position controller 34 may not adjust the focal position on an object located in a region other than the prioritized target region AR, and may adjust the focal position of an object located in the prioritized target region. In other words, the focal position controller 34 may adjust the focal position on the object located in the target region AR having the highest priority order and may not adjust the focal position on the object located in another target region AR. In FIG. 19, a case in which the second target region AR2 has a higher priority order than the first target region AR1, and the object Aa is located in the first target region AR1 and the object Ab is located in the second target region AR2 at the same timing will be described as an example. In this case, the focal position controller 34 keeps adjusting the focal position on the object Ab and does not adjust the focal position on the object Aa.

Furthermore, for example, the focal position controller 34 may switch the focal position so that the focal position is adjusted on the object in each target region AR. In this case, for example, the focal position controller 34 may make a period in which the focal position is kept on the object located in the prioritized target region AR longer than a period in which the focal position is kept on the object located in the target region AR other than the prioritized target region AR. In other words, the focal position controller 34 may make a period in which the focal position is kept on the object located in the target region AR having a higher priority order longer than a period in which the focal position is kept on the object located in the target region AR having a lower priority order. That is, the higher the priority order, the longer the period during which the focal position is kept to be adjusted. Using FIG. 19 as an example, the focal position controller 34 adjusts the focal position so that the focal position is switched between a position overlapping the object Aa and a position overlapping the object Ab. At this time, the focal position controller 34 makes a period in which the focal position is kept on the object Ab located in the second target region AR2 having a higher priority order longer than a period in which the focal position is kept on the object Aa located in the first target region AR1 having a lower priority order.

Furthermore, for example, the focal position controller 34 may adjust the focal position on the object located in the prioritized target region AR first before adjusting the focal position on the object located in the target region AR other than the prioritized target region AR. In other words, the focal position controller 34 may continue to adjust the focal position on the object located in the target region AR having a higher priority order before a timing of adjusting the focal position on the object located in the target region AR having a lower priority order. That is, the higher the priority order, the earlier the timing of adjusting the focal position may be. Using FIG. 19 as an example, the focal position controller 34 adjusts the focal position so that the focal position is switched between a position overlapping the object Aa and a position overlapping the object Ab. At this time, the focal position controller 34 first adjusts the focal position on the object Ab located in the second target region AR2, and then adjusts the focal position on the object located in the first target region AR1 having a lower priority order.

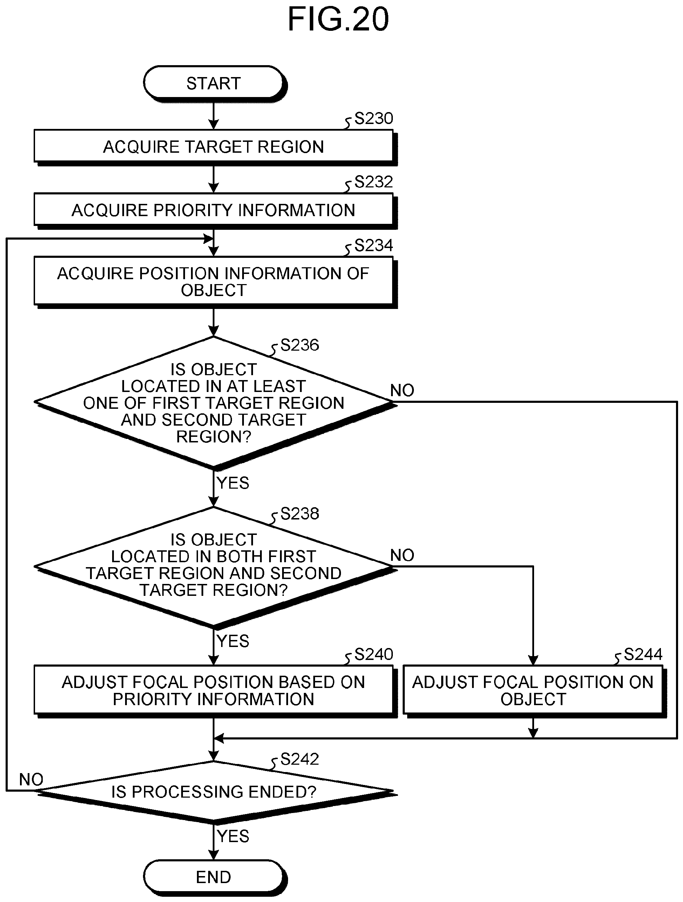

Next, a processing flow of adjusting the focal position described above will be described. FIG. 20 is a flowchart for explaining a processing flow of adjusting a focal position in the sixth embodiment. As illustrated in FIG. 20, the controller 24 causes the target region acquisition unit 30 to acquire information of the target region AR (Step S230) and acquire priority information (Step S232).

The controller 24 causes the object information acquisition unit 32 to acquire the position information of the object (Step S234). An execution order of Steps S230, S232, and S234 may be arbitrary. The controller 24 causes the focal position controller 34 to determine whether the object is located in at least one of the first target region AR1 and the second target region AR2 based on the position information of the object (Step S236). When an object is located in at least one of the first target region AR1 or the second target region AR2 (Step S236; Yes), and in a case in which the object is located in both of the first target region AR1 and the second target region AR2 (Step S238; Yes), the focal position controller 34 adjusts the focal position based on the priority information (Step S240). Thereafter, in a case in which the processing is ended (Step S242; Yes), this process ends, and in a case in which the processing is not ended (Step S242; No), the process returns to Step S234 and continues. On the other hand, in a case in which the objects are not located in both the first target region AR1 and the second target region AR2 (Step S238; No), that is, in a case in which the object is located only in one of the first target region AR1 and the second target region AR2, the focal position controller 34 adjusts the focal position on the object (Step S244), and the process proceeds to Step S242. Further, in a case in which the object is not located in at the first target region AR1 and the second target region AR2 (Step S236; No), that is, in a case in which the object is not located in both the first target region AR1 and the second target region AR, the control of the focal position is not executed, and the process proceeds to Step S242.

As described above, in the sixth embodiment, in a case in which objects exist in multiple target regions AR at the same timing, the focal position controller 34 adjusts the focal position based on the priority information indicating a prioritized object from among the objects in the respective target regions AR. According to the sixth embodiment, even when the multiple objects move to multiple target regions AR at the same time, the focal position can be adjusted appropriately based on the priority information.

The focal position controller 34 may adjust the focal position on the object located in the prioritized target region AR without adjusting the focal position on the object located in a region other than the prioritized target region AR in the priority information. Therefore, even when the objects move to multiple target regions AR at the same time, the focal position can be adjusted appropriately on the prioritized object.

The focal position controller 34 may switch the focal position so that the focal position is adjusted on an object in each target region AR. In this case, the focal position controller 34 makes a period during which the focal position is adjusted on the object located in the prioritized target region AR longer than a period during which the focal position is adjusted on the object located in the target region AR other than the prioritized target region AR. Therefore, the focal position can be adjusted to be longer for the prioritized object.

### (Seventh Embodiment)

Next, a seventh embodiment will be described. The seventh embodiment is different from the fifth embodiment in that a focal position is adjusted on an object that exists in a target region AR and satisfies a predetermined condition. In the seventh embodiment, the description of portions having the same configuration as that of the fifth embodiment will be omitted. The seventh embodiment is also applicable to the sixth embodiment.

In the seventh embodiment, the focal position controller 34 sets the focal position of an object that exists in the target region AR and satisfies a predetermined condition. The focal position controller 34 does not set the focal position on the object that does not satisfy at least one of a condition that the object exists in the target region AR and a condition that the predetermined condition is satisfied. The focal position controller 34 keeps adjusting the focal position on the object while the object on the focal position continues to exist in the target region AR with satisfying a predetermined condition. On the other hand, in a case in which the object no longer satisfies at least one of the condition that the object exists in the target region AR and the condition that the predetermined condition is satisfied, the focal position controller 34 removes the focal position from the object. That is, for example, in a case in which the object satisfies the predetermined condition but moves out of the target region AR, or in a case in which the object exists in the target region AR but no longer satisfies the predetermined condition, the focal position controller 34 removes the focal position from the object.

The focal position controller 34 may determine whether the predetermined condition is satisfied by an arbitrary method, but for example, may determine whether the predetermined condition is satisfied based on at least one of the position information of the object or the image of the object. Here, the position information of the object may refer to a measurement result of the object position measurement unit 14, and the image of the object may refer to image data which is acquired by the imaging element 12 and in which the object is imaged.

The predetermined condition here may be any condition except a condition that the object does not exist in the target region AR. For example, the predetermined condition may be at least one of a condition that the object is performing a predetermined motion, a condition that the object has a predetermined shape, or a condition that the object is oriented in a predetermined direction. In addition, any two of these conditions may be set as the predetermined condition, or all of these conditions may be set as the predetermined condition. In a case in which multiple predetermined conditions are set, the focal position controller 34 determines that the predetermined conditions are satisfied in a case in which all the conditions are satisfied.

A case in which the motion of the object is set to a predetermined condition will be described. In this case, the focal position controller 34 determines whether the object is performing a predetermined motion based on the position information of the object continuously acquired in time series. The focal position controller 34 adjusts the focal position of the object existing in the target region AR and performing a predetermined motion. The focal position controller 34 does not adjust the focal position of the object that does not satisfy at least one of the condition that the object exists in the target region AR and the condition that the object performs the predetermined motion. The focal position controller 34 keeps adjusting the focal position on the object while the object on the focal position exists in the target region AR and continues the predetermined motion. On the other hand, in a case in which the object no longer satisfies at least one of the condition that the object exists in the target region AR and the condition that the object performs the predetermined motion, the focal position controller 34 removes the focal position from the object. Note that the motion of the object here refers to a moving mode of the object, and may refer to, for example, a moving direction and a moving speed of the object. For example, in a case in which the predetermined motion indicates that the object moves vertically downward at a speed of 10 m/h or more, the focal position controller 34 adjusts the focal position of the object moving vertically downward at a speed of 10 m/h or more in the target region AR. Note that the motion of the object is not limited to a motion indicating the moving direction and the moving speed of the object, and may indicate an arbitrary moving mode. For example, the motion of the object may refer to at least one of the moving direction and the moving speed of the object.

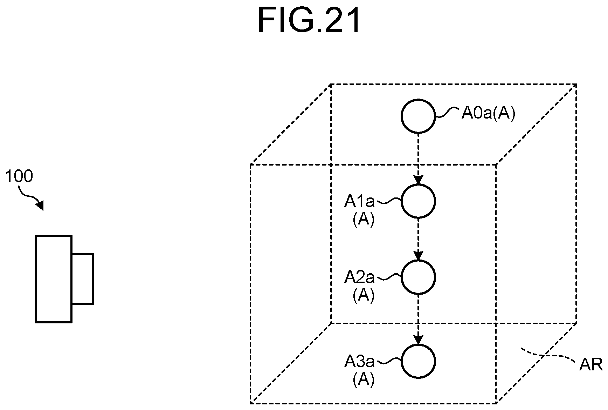

FIG. 21 is a schematic diagram illustrating an example of a case in which a motion of the object is set as a predetermined condition. In the example of FIG. 21, the predetermined condition is that the object moves vertically downward (in the direction opposite to the Z direction), that is, the moving direction of the object. Then, the example of FIG. 21 illustrates a case in which the object A moves vertically downward from the position A0a to the position A3a through the position A1a and the position A2a and stops at the position A3a. The position A0a is outside the target region AR, and the positions A1a, A2a, and A3a are inside the target region AR. In this case, since the object A is out of the target region AR at a timing when the object A exists at the position A0a, the focal position controller 34 does not adjust the focal position on the object A but, for example, adjusts the focal position on the preset setting position. Then, the focal position controller 34 adjusts the focal position on the object A at a timing when the object A exists at the position A1a, that is, at a timing when the object A enters the target region AR while moving vertically downward. The focal position controller 34 keeps adjusting the focal position on the object A even at a timing when the object A exists at the position A2a, and removes the focal position from the object A and returns the focal position to the preset setting position at a timing when the object A moves to the position A3a and stops.

Next, a case in which a shape of the object is set to a predetermined condition will be described. In this case, the focal position controller 34 determines whether the object has a predetermined shape based on the image data in which the object is captured. The focal position is adjusted on the object existing in the target region AR and having a predetermined shape. The focal position controller 34 does not adjust the focal position on the object that does not satisfy at least one of the condition that the object exists in the target region AR and the condition that the object has a predetermined shape. The focal position controller 34 keeps adjusting the focal position on the object while the object at the focal position has a predetermined shape and continues to exist in the target region AR. On the other hand, in a case in which the object no longer satisfies at least one of the condition that the object exists in the target region AR and the condition that the object has the predetermined shape, the focal position controller 34 removes the focal position from the object. The shape of the object here may be, for example, at least one of a size of the object or an outer shape of the object. For example, in a case in which the predetermined shape indicates a predetermined size or more, the focal position controller 34 adjusts the focal position on an object existing in the target region AR and having a predetermined size or more. Note that a 3D shape information acquired by the object information acquisition unit 32 may be used to acquire a shape information of the object.

A case in which the orientation of the object is set to a predetermined condition will be described. In this case, the focal position controller 34 determines whether the object is directed in a predetermined direction based on the image data in which the object is captured. The focal position is adjusted with respect to the object existing in the target region AR and facing the predetermined direction. The focal position controller 34 does not adjust the focal position on the object that does not satisfy at least one of the condition that the object exists in the target region AR and the condition that the object is directed in the predetermined direction. The focal position controller 34 keeps adjusting the focal position on the object during a period in which the object on the focal position is kept existing in the target region AR while facing the predetermined direction. On the other hand, in a case in which the object no longer satisfies at least one of the condition that the object exists in the target region AR and the condition that the object is directed in the predetermined direction, the focal position controller 34 removes the focal position from the object. Note that the information on the 3D shape acquired by the object information acquisition unit 32 may be used to acquire the information on the orientation of the object.

Note that the predetermined condition may be set by an arbitrary method, for example, may be set in advance. In this case, the focal position controller 34 may read information (for example, the moving direction and the moving speed) indicating a preset predetermined condition from the storage 22, or may acquire a predetermined condition from another device via the communication unit 20. Furthermore, for example, in a case in which a predetermined condition is not set in advance, the focal position controller 34 may automatically set a predetermined condition. Furthermore, for example, the user may set a predetermined condition. In this case, for example, the user may input information (for example, a moving direction and a moving speed) designating a predetermined condition to the input unit 16, and the focal position controller 34 may set a predetermined condition based on the information designated by the user.

As described above, in the seventh embodiment, the focal position controller 34 may adjust the focal position on the object existing in the target region AR and performing a predetermined motion. The focal position controller 34 keeps adjusting the focal position on the object during a period in which the object performs a predetermined motion, and removes the focal position from the object when the object no longer performs the predetermined motion. In this manner, in addition to being within the target region AR, satisfying a predetermined motion is also a condition for adjusting the focal position, whereby an object having a specific motion can be tracked and the focal position can be adjusted appropriately.

In the seventh embodiment, the focal position controller 34 may adjust the focal position on the object existing in the target region AR and having a predetermined shape. As described above, in addition to being in the target region AR, by setting the predetermined shape as a condition for adjusting the focal position, it is possible to track an object having a specific shape and appropriately adjust the focal position.

In the seventh embodiment, the focal position controller 34 may adjust the focal position on the object existing in the target region AR and facing a predetermined direction. As described above, in addition to being in the target region AR, by setting the condition that the object faces a predetermined direction as the condition for adjusting the focal position, it is possible to track the object in a specific direction and appropriately adjust the focal position.

### (Eighth Embodiment)

### (Configuration of Imaging Device)

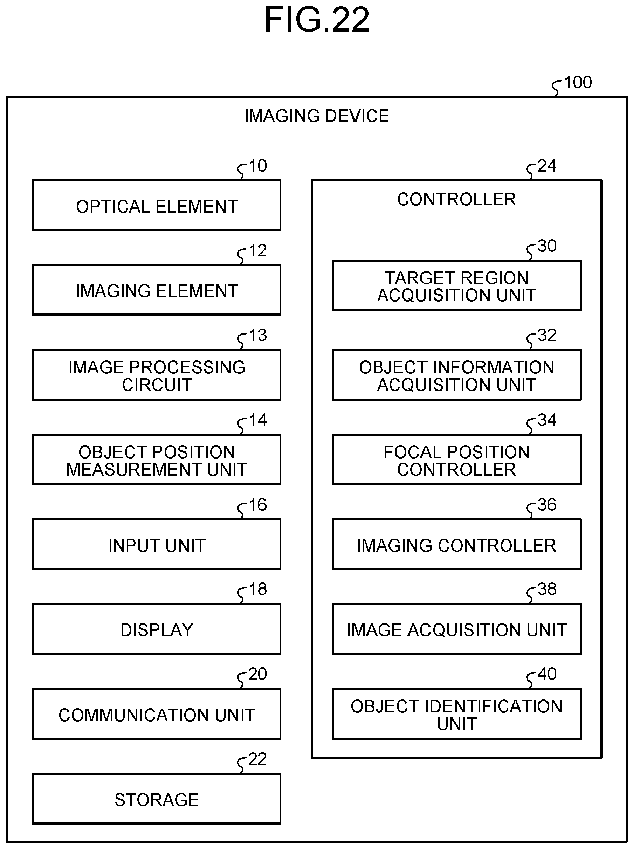

FIG. 22 is a schematic block diagram of an imaging device according to an eighth embodiment. An imaging device 100 according to the eighth embodiment is an imaging device that images an object within an imaging range. The imaging device 100 is an autofocus camera capable of adjusting a focal position automatically. The imaging device 100 may be a video camera that captures a moving image by capturing an image for each predetermined frame, or may be a camera that captures a still image. The imaging device 100 may be used for any purpose, and for example, may be used as a monitoring camera provided at a predetermined position in facilities or outdoors.

As illustrated in FIG. 1, the imaging device 100 includes an optical element 10, an imaging element 12, an image processing circuit 13, an object position measurement unit 14, an input unit 16, a display 18, a communication unit 20, a storage 22, and a controller 24.

The optical element 10 is, for example, an element of an optical system such as a lens. The number of optical elements 10 may be one or plural.

The imaging element 12 is an element that converts light incident through the optical element 10 into an image signal that is an electric signal. The imaging element 12 is, for example, a charge coupled device (CCD) sensor, a complementary metal oxide semiconductor (CMOS) sensor, or the like.

The image processing circuit 13 generates image data for each frame from the image signal generated by the imaging element 12. The image data is, for example, data including information of luminance and color of each pixel in one frame, and may be data to which gradation for each pixel is assigned.

The object position measurement unit 14 is a sensor that measures a position of an object to be measured with respect to the imaging device 100 (a relative position of the object). The object here may be any object, and may be a living thing or an inanimate object, and it similarly applies to following descriptions. In addition, the object here may refer to a movable object, but is not limited thereto, and may refer to an object that does not move.

In the present embodiment, the object position measurement unit 14 measures the distance from the imaging device 100 to the object as the relative position of the object. The object position measurement unit 14 may be any sensor capable of measuring the relative position of the object, and may be, for example, a time of flight (TOF) sensor. In a case in which the object position measurement unit 14 is a TOF sensor, for example, a light emitting element (for example, a light emitting diode (LED) that emits light and a light receiving unit that receives light are provided, and the distance to the object is measured by a flight time of the light emitted from the light emitting element to the object and returned to the light receiving unit. Note that, in addition to measuring the distance from the imaging device 100 to the object as the relative position of the object, the object position measurement unit 14 may also measure, for example, a direction in which the object exists with respect to the imaging device 100. In other words, the object position measurement unit 14 may measure, as the relative position of the object, the position (coordinates) of the object in the coordinate system in which the imaging device 100 is set as an origin.

The input unit 16 is a mechanism that receives an input (operation) from a user, and may be, for example, a button, a keyboard, a touch panel, or the like.

The display 18 is a display panel that displays an image. In addition to the image captured by the imaging device 100, the display 18 may be capable of displaying an image for the user to set a target region AR described later.

The communication unit 20 is a communication module that communicates with an external device, and may be, for example, an antenna, a Wi-Fi (registered trademark) module, or the like. Although the imaging device 100 communicates with an external device by wireless communication, wired communication may be used, and a communication method may be arbitrary.

The storage 22 is a memory that stores captured image data and various types of information such as calculation contents and programs of the controller 24, and includes at least one of, for example, a random access memory (RAM), a main storage device such as a read only memory (ROM), or an external storage device such as a hard disk drive (HDD). The program for the controller 24 stored in the storage 22 may be stored in a recording medium readable by the imaging device 100.

The controller 24 is an arithmetic device, and includes, for example, an arithmetic circuit such as a central processing unit (CPU). The controller 24 includes a target region acquisition unit 30, an object information acquisition unit 32, a focal position controller 34, an imaging controller 36, an image acquisition unit 38, and an object identification unit 40. The controller 24 reads and executes a program (software) from the storage 22 to implement the target region acquisition unit 30, the object information acquisition unit 32, the focal position controller 34, the imaging controller 36, the image acquisition unit 38, the object identification unit 40, and executes these processes. Note that the controller 24 may execute these processes by one CPU, or may include multiple CPUs and execute the processes by the multiple CPUs. In addition, at least a part of the processing of the target region acquisition unit 30, the object information acquisition unit 32, the focal position controller 34, the imaging controller 36, the image acquisition unit 38, and the object identification unit 40 may be implemented by a hardware circuit.

### (Target Region Acquisition Unit)

The target region acquisition unit 30 acquires information of a target region AR set in an imaging region of the imaging device 100. The target region AR is a region set to adjust the focal position automatically. The information of the target region AR is information indicating the position of the target region AR, that is, position information of the target region AR. Hereinafter, the target region AR will be described.

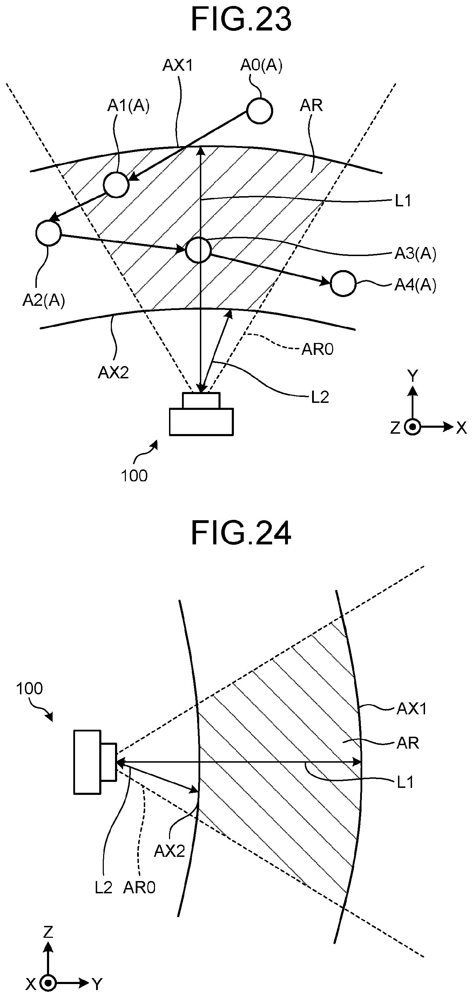

FIGS. 23 and 24 are schematic diagrams for explaining an example of a target region. FIG. 23 is a diagram of the imaging device 100 and the target region AR as viewed from above in a vertical direction, and FIG. 24 is a diagram of the imaging device 100 and the target region AR as viewed from a horizontal direction. Hereinafter, the direction Z is a vertical direction, the direction X is one direction of a horizontal direction orthogonal to the direction Z, and the direction Y is a direction (horizontal direction) orthogonal to the direction Z and the direction X. As illustrated in FIGS. 23 and 23, a range in which an image can be captured by the imaging device 100 is defined as an imaging region AR0. The imaging region AR0 refers to a region (space) within an angle of view of the imaging element 12, in other words, a range that can be captured as an image in the real space. The target region AR is a region (space) set within the range of the imaging region AR0.

More specifically, the target region AR is a region between a first position AX1 and a second position AX2 in the imaging region AR0. The first position AX1 is a position where a distance from the imaging device 100 is a first distance L1, and the second position AX2 is a position where a distance from the imaging device 100 is a second distance L2 shorter than the first distance L1. As illustrated in FIGS. 23 and 24, in the present embodiment, the first position AX1 can be said to be a virtual plane including each position (coordinate) where the distance from the imaging device 100 is the first distance L1 in the imaging region AR0. Similarly, the second position AX2 can be said to be a virtual plane including each position (coordinate) at which the distance from the imaging device 100 is the second distance L2 in the imaging region AR0. That is, the target region AR can be said to be a space surrounded by a virtual plane whose distance from the imaging device 100 is the second distance L2 and a virtual plane whose distance from the imaging device 100 is the first distance L1 in the imaging region AR0. Note that the first position AX1 is not limited to a virtual plane in which all positions (coordinates) included in the first position AX1 become the first distance L1 from the imaging device 100, and may be a virtual plane in which at least some positions (coordinates) included in the first position AX1 become the first distance L1 from the imaging device 100. Similarly, the second position AX2 may be a virtual plane in which at least a part of the position (coordinates) included in the second position AX2 is a second distance L2 from the imaging device 100.

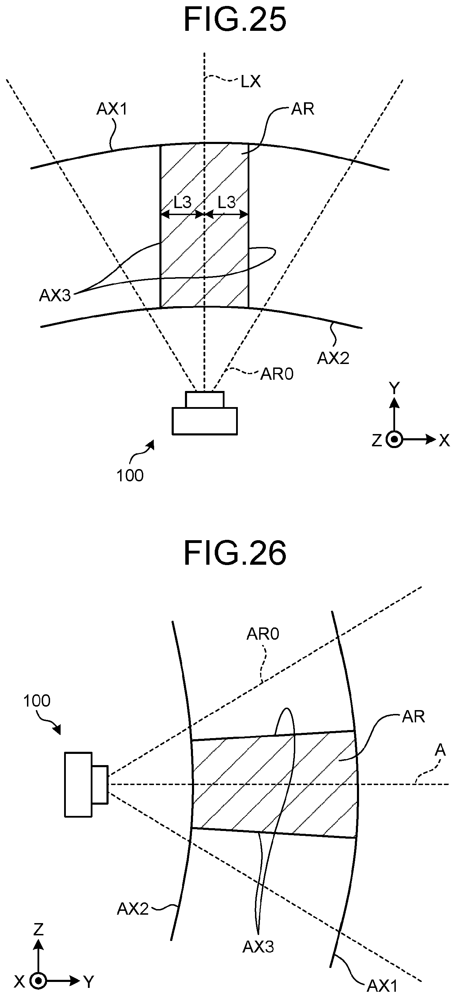

FIGS. 25 and 26 are schematic diagrams illustrating another example of the target region. In the description of FIGS. 23 and 24, the target region AR is divided by the first position AX1 and the second position AX2 with respect to the imaging region AR0 in the optical axis direction (depth direction of the image) of the imaging device 100, but is not divided with respect to the imaging region AR0 in a radiation direction (a spread direction of an angle of view) with respect to the optical axis direction of the imaging device 100. In other words, end surfaces in the direction in which the angle of view of the target region AR spreads coincide with end surfaces in the direction in which the angle of view of the imaging region AR0 spreads. However, the present invention is not limited thereto, and the target region AR may also be divided with respect to the imaging region AR0 in the direction in which the angle of view spreads. That is, for example, as illustrated in FIGS. 25 and 26, the target region AR may also be divided with respect to the imaging region AR0 in the spread direction of the angle of view by a third position AX3. In this example, the third position AX3 is a virtual surface (here, a closed curved surface having a side surface shape of a cylinder) including positions (coordinate) radially outward and away from the optical axis LX of the imaging device 100 by a predetermined distance. In this case, the target region AR is a region (space) surrounded by the first position AX1, the second position AX2, and the third position AX3. Note that the third position AX3 is not limited to a virtual plane in which all positions (coordinates) included in the third position AX3 become the third distance L3 from the optical axis LX, and may be a virtual plane in which at least some positions (coordinates) included in the third position AX3 become the third distance L3 from the optical axis LX. For example, the third position AX3 may be a virtual plane that expands radially outward (in a horizontal direction and an elevation angle direction) at a predetermined angle as the distance from the imaging device 100 increases along the optical axis direction.

Note that the size and the shape of the target region AR are not limited to the above description and may be arbitrary. In addition, the position of the target region AR is not limited to the position between the first position AX1 and the second position AX2, and may be any position. Furthermore, the target region AR is a region set in the imaging region AR0, but is not limited thereto. For example, when a range that can be measured by the object position measurement unit 14 is a distance measurement region (a distance measurement space), the target region AR may be a region set in the distance measurement region. In this case, the imaging region AR0 in FIGS. 23 to 26 may be treated as a distance measurement region.

The target region acquisition unit 30 may acquire the information of the target region AR by an arbitrary method. For example, the position of the target region AR may be set in advance. In this case, the target region acquisition unit 30 may read the position information of the target region AR set in advance from the storage 22, or may acquire the position information of the target region AR from another device via the communication unit 20. Furthermore, for example, in a case in which the position of the target region AR is not set in advance, the target region acquisition unit 30 may set the position of the target region AR automatically. Furthermore, for example, the user may set the position of the target region AR. In this case, for example, the user may input information (for example, values of the first distance L1, the second distance L2, and the third distance L3, and the like) designating the position of the target region AR to the input unit 16, and the target region acquisition unit 30 may set the target region AR based on the position information of the target region AR designated by the user. Furthermore, for example, the target region AR may be set by designating coordinates. That is, for example, in the example of FIG. 23, coordinates P1, P2, P3, and P4 that are vertex positions of the target region AR may be designated, and a region surrounded by the coordinates P1 to P4 may be set as the target region AR.

### (Object Information Acquisition Unit)

The object information acquisition unit 32 acquires position information of an object existing in an imaging region AR0. The object information acquisition unit 32 controls the object position measurement unit 14 to cause the object position measurement unit 14 to measure the relative position of the object with respect to the imaging device 100. The object information acquisition unit 32 acquires a measurement result of the relative position of the object with respect to the imaging device 100 by the object position measurement unit 14 as position information of the object. The object information acquisition unit 32 sequentially acquires the position information of the object by acquiring the position information of the object every predetermined time. Furthermore, the object information acquisition unit 32 can also acquire information indicating a shape of the object (for example, a 3D shape of the object) based on the position information of the object. For example, the object information acquisition unit 32 can acquire the 3D shape of the object by accumulating multiple pieces of position information such as TOF image information.

### (Focal Position Controller)

The focal position controller 34 sets a focal position of the imaging device 100. The focal position controller 34 controls the focal position by controlling a position of the optical element 10, that is, by moving the position of the optical element 10.

The focal position controller 34 adjusts the focal position on the object existing in the target region AR. In other words, the focal position controller 34 sets the focal position at the position of the object determined to exist in the target region AR. In the present embodiment, the focal position controller 34 determines whether the object exists in the target region AR based on the position information of the object acquired by the object information acquisition unit 32. In a case in which the position of the object acquired by the object information acquisition unit 32 overlaps with the position of the target region AR, the focal position controller 34 determines that the object exists in the target region AR and sets the focal position at the position of the object acquired by the object information acquisition unit 32. That is, for example, in a case in which the distance from the imaging device 100 to the object is equal to or smaller than the first distance L1 and equal to greater than the second distance L2, the focal position controller 34 determines that the object exists in the target region AR and adjusts the focal position on the object. On the other hand, the focal position controller 34 does not adjust the focal position of the object that does not exist in the target region AR. That is, for example, in a case in which the distance from the imaging device 100 to the object is longer than the first distance L1 or shorter than the second distance L2, the focal position controller 34 determines that the object does not exist in the target region AR and does not adjust the focal position on the object.

The focal position controller 34 keeps adjusting the focal position on the object during a period in which the object at the focal position exists in the target region AR. That is, the focal position controller 34 determines whether or not the object continues to exist in the target region AR based on the position information of the object at every predetermined time acquired by the object information acquisition unit 32, and keeps adjusting the focal position on the object during a period in which the object continues to exist in the target region AR. On the other hand, in a case in which the object on the focal position moves out of the target region AR, that is, in a case in which the object no longer exists in the target region AR, the focal position controller 34 takes the focal position out of the object and focuses on a position other than the object.

Note that the focal position controller 34 may not set the focal position of the object existing in the target region AR from the start of operation of the imaging device 100 (a timing at which the imaging becomes possible). That is, the focal position controller 34 may set the focal position of the object entering the target region AR after starting the operation. In other words, the focal position controller 34 may set the focal position of an object from a timing at which the object starts to exist in the target region AR for the object that exists in the target region AR at a certain timing but does not exist in the target region AR at a timing before the certain timing. In other words, in a case in which the object moves from the outside of the target region AR into the target region AR, the object may be recognized as a target on which the focal position controller 34 focuses. That is, the focal position controller 34 may set the focal position of the object moved from the outside of the target region AR into the target region AR.

Furthermore, in a case in which there is no object in the target region AR, the focal position controller 34 may set the focal position to a preset setting position. The preset setting position may be arbitrarily set, but is preferably set in the target region AR such as a center position of the target region AR.

Note that the focal position may be set by the user. In this case, for example, an auto mode in which the focal position is automatically adjusted and a manual mode in which the focal position is adjusted by the user may be switchable. Then, in a case of the auto mode, the focal position is adjusted by the focal position controller 34 as described above. On the other hand, in a case of the manual mode, the user inputs an operation of adjusting the focal position to the input unit 16, and the focal position controller 34 adjusts the focal position according to the user's operation.

### (Imaging Controller)

The imaging controller 36 controls imaging by the imaging device 100 to capture an image. The imaging controller 36 controls, for example, the imaging element 12 to cause the imaging element 12 to acquire an image signal. For example, the imaging controller 36 may cause the imaging element 12 to acquire the image signal automatically, or may cause the imaging element 12 to acquire the image signal according to a user's operation.

### (Image Acquisition Unit)

The image acquisition unit 38 acquires image data acquired by the imaging element 12. For example, the image acquisition unit 38 controls the image processing circuit 13 to cause the image processing circuit 13 to generate image data from the image signal generated by the imaging element 12, and acquires the image data. The image acquisition unit 38 stores the image data in the storage 22.

### (Object Identification Unit)

In a case in which an object exists in the target region AR, the object identification unit 40 determines whether the object is the same as an object existing in the target region AR in the past. That is, when it is determined that the object is located in the target region AR, the focal position controller 34 adjusts the focal position on the object, and the object identification unit 40 determines whether the object is the same as the object existing in the same target region AR in the past.

In the present embodiment, the object identification unit 40 determines whether the objects are the same based on the image data of the object which is determined to exist in the target region AR and the image data of the object which was determined to exist in the target region AR in the past. In this case, the imaging controller 36 causes an image including an object to be captured at a timing when it is determined that the object exists in the target region AR, and causes the image acquisition unit 38 to acquire image data of the object. The object identification unit 40 determines whether the objects are the same based on the image data of the object acquired this time and the image data of the object acquired in the past. Note that the image data of the object is image data indicating an outer shape of the object.

Although a method of determining whether the objects based on the image data are the same may be arbitrary, for example, the object identification unit 40 may extract a feature amount of the object from the image data of the object and determine whether the objects are the same based on a degree of matching of the feature amounts. That is, the object identification unit 40 extracts the feature amount of the object from the image data of the object acquired in the past, extracts the feature amount of the object from the image data of the object acquired this time, and determines whether the objects are the same based on the degree of matching of the feature amounts of the respective objects. The object identification unit 40 determines that the objects are the same in a case in which the degree of matching of the feature amounts is equal to or greater than a predetermined threshold value, and determines that the objects are not the same in a case in which the degree of matching of the feature amounts is less than the predetermined threshold value. Note that the extraction of the feature amount from the image data of the object acquired in the past may be executed at an arbitrary timing, and for example, the feature amount may be extracted at a past timing when the image data of the object is acquired and stored in the storage 22. In this case, the object identification unit 40 reads the feature amount extracted from the image data of the object acquired in the past from the storage 22. In addition, a method of extracting the feature amount and calculating the degree of matching may be arbitrary, but may be executed by, for example, an artifical intelligence (AI) model. In addition, the determination for the same object may be executed based on information other than the image data. For example, the determination of the same object may be executed using the 3D shape information acquired by the object information acquisition unit 32.

Note that the past here refers to a period from the current time (the latest timing at which it is determined that the object is located in the target region AR) to a predetermined time ago. That is, in the present embodiment, in a case in which the object exists in the target region AR after a timing before a predetermined time, the object identification unit 40 determines whether the object and the object determined to exist in the target region AR this time are the same. In other words, the object identification unit 40 determines whether the object determined to exist in the current target region AR is the same as the object existing in the target region AR after a timing before a predetermined time. However, the present invention is not limited to the case where the determination of the same object is made only for the object existing in the target region AR after a timing before a predetermined time. That is, even in a case in which there is an object determined to exist in the target region AR earlier than a predetermined time ago, the object identification unit 40 may determine that the object is the same as the object.

Furthermore, in a case in which the object has existed in the target region AR more than once in the past, the object identification unit 40 may determine whether the current object and the object existing in the target region AR in the latest past match. However, the present invention is not limited to the case of determining the same only as the latest object, and the object identification unit 40 may determine whether the current object matches each past object based on the image data of the current object and the image data of each past object.

Note that, in a case in which the image in the imaging region AR0 is displayed on the display unit 18 in real time, it can be said that the imaging device 100 constantly captures an image. However, in a case in which the image is not being recorded, the image is temporarily stored in a buffer or the like, and then is automatically erased without being stored in the storage 22. In the present embodiment, the image data used for the determination of the same object may is not image data for recording that is automatically stored in the storage 22 but image data that is automatically erased without being stored in the storage 22.

The method for determining whether the object is same as the past object is not limited to using the image data. For example, the object identification unit 40 may execute the determination of the same object for the past object based on the position information of the object acquired by the object information acquisition unit 32. In this case, for example, based on the position information of the objects continuously acquired in time series, the object identification unit 40 determines whether the object located in the target region AR this time corresponds to the object that has existed in the target region AR in the past, once moved out of the target region AR, and re-entered the target region AR this time. In a case in which the object identification unit 40 determines that the object is an object that has existed in the target region AR in the past and re-entered the target region AR this time, the object identification unit 40 determines that the current object is the same as the past object.

The object identification unit 40 stores the determination result of the same object for the past object in the storage 22. That is, the object identification unit 40 stores the determination result indicating whether the object determined to be located in the current target region AR is the same as the object existing in the same target region AR in the past in the storage 22. In this case, for example, the object identification unit 40 may store the determination result in the storage 22 in association with the image data of the object, or may store the determination result in the storage 22 in association with the time when the image data is acquired.

An example of the focal position adjusting processing described above and the processing of determining the same as the past object will be described with reference to FIG. 23. FIG. 23 illustrates an example in a case in which the object A moves in an order of a position A0 outside the target region AR, a position A1 inside the target region AR, a position A2 outside the target region AR, a position A3 inside the target region AR, and a position A4 outside the target region AR. In this case, the focal position controller 34 does not adjust the focal position on the object A at a timing when the object A exists at the position A0, and adjusts the focal position on the preset setting position, for example. Then, the focal position controller 34 adjusts the focal position on the object A at a timing when the object A is located at the position A1, that is, at a timing when the object A enters the target region AR. At this time, the object identification unit 40 determines whether the object A located at the position A1 and the object located in the target region AR before the timing at which the object A is located at the position A1 are the same. In this example, since there is no object located in the target region AR before the timing at which the object A is located at the position A1, the object identification unit 40 determines that there is no same object as the object A in the past, and stores the determination result in the storage 22.

The focal position controller 34 keeps adjusting the focal position on the object A during a period in which the object A is located in the target region AR. Thereafter, at a timing when the object A moves to the position A2, that is, at a timing when the object A goes out of the target region AR, the focal position controller 34 removes the focal position from the object A and returns the focal position to the preset setting position. Thereafter, the focal position is adjusted on the object A at a timing when the object A is located at the position A3, that is, at a timing when the object A enters the target region AR again. At this time, the object identification unit 40 determines whether the object A located at the position A3 and the object located in the target region AR before the timing at which the object A is located at the position A3 are the same. In this example, since the object A is located in the target region AR at the position A1, the object identification unit 40 determines that the object A located at the position A3 and the object A located at the position A1 are the same object, and stores the determination result in the storage 22.

Thereafter, at a timing when the object A moves to the position A4, that is, at a timing when the object A goes out of the target region AR, the focal position controller 34 removes the focal position from the object A and returns the focal position to the preset setting position.

### (Flow of Adjusting Focal Position)

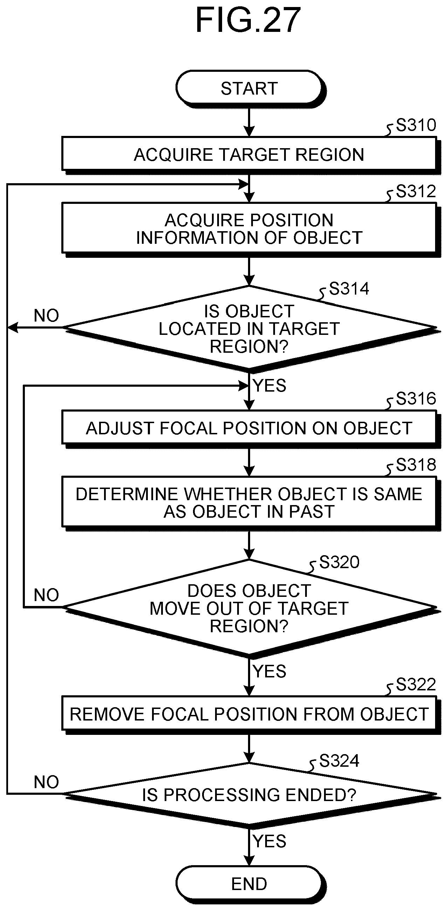

Next, a processing flow of adjusting the focal position described above will be described. FIG. 27 is a flowchart for explaining a processing flow of adjusting a focal position. As illustrated in FIG. 27, the controller 24 causes the target region acquisition unit 30 to acquire information of the target region AR (Step S310), and causes the object information acquisition unit 32 to acquire position information of the object (Step S312). An execution order of Steps S310 and S312 may be arbitrary. The controller 24 causes the focal position controller 34 to determine whether the object is located in the target region AR based on the position information of the object (Step S314). In a case in which the object is not located in the target region AR (Step S314; No), the process returns to Step S312, and the acquisition of the position information of the object is continued. On the other hand, in a case in which the object is located in the target region AR (Step S314; Yes), the focal position controller 34 adjusts the focal position on the object (Step S316). Then, the object identification unit 40 determines whether the object located in the target region AR is the same as the object located in the target region AR in the past (Step S318). In the present embodiment, for example, the object identification unit 40 determines whether an object exists in the target region AR after a timing that is a predetermined time before a timing at which the object is located in the target region AR. In a case in which the object exists in the target region AR after the timing before the predetermined time, the object identification unit 40 determines whether the object existing in the target region AR after the timing before the predetermined time is the same as the object existing in the current target region AR. The object identification unit 40 causes the storage 22 to store a determination result indicating whether the objects are the same. Thereafter, the acquisition of the position information of the object is continued, and it is determined whether the object has moved out of the target region AR (Step S320). In a case in which the object does not move out of the target region AR (Step S320; No), that is, in a case in which the object continues to exist in the target region AR, the process returns to Step S316, and the focal position is kept on the object. In a case in which the object has moved to the outside of the target region AR (Step S320; Yes), the focal position controller 34 removes the focal position from the object (Step S322). Thereafter, in a case in which the processing is not ended (Step S324; No), the process returns to Step S312, and in a case in which the processing is ended (Step S324; Yes), this process ends.

### (Effects)

As described above, the imaging device 100 according to the present embodiment includes the imaging element 12, the object information acquisition unit 32, the target region acquisition unit 30, the focal position controller 34, and the object identification unit 40. The object information acquisition unit 32 acquires position information of an object existing in the imaging region AR0 of the imaging element 12. The target region acquisition unit 30 acquires position information of the target region AR in the imaging region AR0. In a case in which an object exists in the target region AR, the focal position controller 34 controls the focal position of the imaging device 100 so as to adjust the focal position on the object. In a case in which an object exists in the target region AR, the object identification unit 40 determines whether the object is the same as an object existing in the target region AR in the past.

Here, in an autofocus imaging device, it is required to adjust a focal position appropriately. For that, since the imaging device 100 according to the present embodiment adjusts the focal position on the object existing in the target region AR, it can appropriately focus on an object existing in the target region AR, which is a remarkable region in monitoring or the like, for example. Furthermore, in the present embodiment, since it is determined whether the object in the target region AR has been located in the same target region AR in the past, when the object appears in the target region AR with a time difference, it is possible to recognize whether the objects are the same.

The object identification unit 40 determines whether the objects are the same based on the image data acquired by imaging the object existing in the target region AR by the imaging element 12 and the image data acquired by imaging the object existing in the target region AR in the past by the imaging element 12. By executing the determination of the same object based on the image data, in a case in which the objects appear in the target region AR with a time difference, it is possible to recognize whether the objects are the same appropriately.

In a case in which an object exists in the target region AR, the object identification unit 40 determines whether the object is the same as the object existing in the target region AR after a timing before a predetermined time. Therefore, in a case in which objects appear in the target region AR with a time difference, it is possible to recognize whether or not the objects are the same appropriately.

The target region AR is located between a first position AX1 at which a distance from the imaging device 100 is a first distance L1 and a second position AX2 at which a distance from the imaging device 100 is a second distance L2 shorter than the first distance L1. The imaging device 100 according to the present embodiment can appropriately adjust the focal position on an object existing at such a position.

### (Ninth Embodiment)

Next, a ninth embodiment will be described. The ninth embodiment is different from the eighth embodiment in that a focal position is adjust on an object that exists in a target region AR and satisfies a predetermined condition. In the ninth embodiment, the description of portions having the same configuration as that of the eighth embodiment will be omitted.

In the ninth embodiment, the focal position controller 34 sets the focal position of an object that exists in the target region AR and satisfies a predetermined condition. The focal position controller 34 does not set the focal position on the object that does not satisfy at least one of a condition that the object exists in the target region AR and a condition that the predetermined condition is satisfied. The focal position controller 34 keeps adjusting the focal position on the object while the object on the focal position continues to exist in the target region AR with satisfying a predetermined condition. On the other hand, in a case in which the object no longer satisfies at least one of the condition that the object exists in the target region AR and the condition that the predetermined condition is satisfied, the focal position controller 34 removes the focal position from the object. That is, for example, in a case in which the object satisfies the predetermined condition but moves out of the target region AR, or in a case in which the object exists in the target region AR but no longer satisfies the predetermined condition, the focal position controller 34 removes the focal position from the object.

The focal position controller 34 may determine whether the predetermined condition is satisfied by an arbitrary method, but for example, may determine whether the predetermined condition is satisfied based on at least one of the position information of the object or the image of the object. Here, the position information of the object may refer to a measurement result of the object position measurement unit 14, and the image of the object may refer to image data which is acquired by the imaging element 12 and in which the object is imaged.

The predetermined condition here may be any condition except a condition that the object does not exist in the target region AR. For example, the predetermined condition may be at least one of a condition that the object is performing a predetermined motion, a condition that the object has a predetermined shape, or a condition that the object is oriented in a predetermined direction. In addition, any two of these conditions may be set as the predetermined condition, or all of these conditions may be set as the predetermined condition. In a case in which multiple predetermined conditions are set, the focal position controller 34 determines that the predetermined conditions are satisfied in a case in which all the conditions are satisfied.

A case in which the motion of the object is set to a predetermined condition will be described. In this case, the focal position controller 34 determines whether the object is performing a predetermined motion based on the position information of the object continuously acquired in time series. The focal position controller 34 adjusts the focal position of the object existing in the target region AR and performing a predetermined motion. The focal position controller 34 does not adjust the focal position of the object that does not satisfy at least one of the condition that the object exists in the target region AR and the condition that the object performs the predetermined motion. The focal position controller 34 keeps adjusting the focal position on the object while the object on the focal position exists in the target region AR and continues the predetermined motion. On the other hand, in a case in which the object no longer satisfies at least one of the condition that the object exists in the target region AR and the condition that the object performs the predetermined motion, the focal position controller 34 removes the focal position from the object. Note that the motion of the object here refers to a moving mode of the object, and may refer to, for example, a moving direction and a moving speed of the object. For example, in a case in which the predetermined motion indicates that the object moves vertically downward at a speed of 10 m/h or more, the focal position controller 34 adjusts the focal position of the object moving vertically downward at a speed of 10 m/h or more in the target region AR. Note that the motion of the object is not limited to a motion indicating the moving direction and the moving speed of the object, and may indicate an arbitrary moving mode. For example, the motion of the object may refer to at least one of the moving direction and the moving speed of the object.

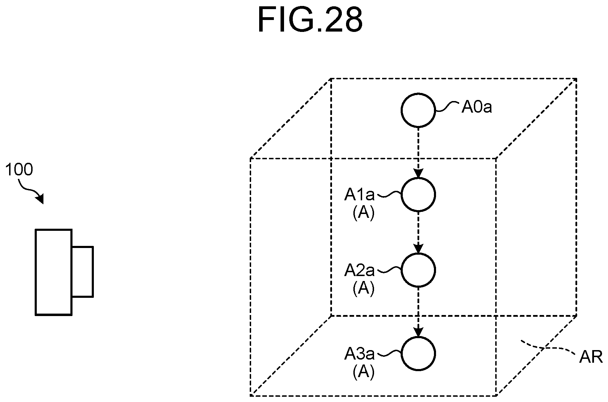

FIG. 28 is a schematic diagram illustrating an example of a case in which a motion of the object is set as a predetermined condition. In the example of FIG. 28, the predetermined condition is that the object moves vertically downward (in the direction opposite to the Z direction), that is, the moving direction of the object. Then, the example of FIG. 28 illustrates a case in which the object A moves vertically downward from the position A0a to the position A3a through the position A1a and the position A2a and stops at the position A3a. The position A0a is outside the target region AR, and the positions A1a, A2a, and A3a are inside the target region AR. In this case, since the object A is out of the target region AR at a timing when the object A exists at the position A0a, the focal position controller 34 does not adjust the focal position on the object A but, for example, adjusts the focal position on the preset setting position. Then, the focal position controller 34 adjusts the focal position on the object A at a timing when the object A exists at the position A1a, that is, at a timing when the object A enters the target region AR while moving vertically downward. The focal position controller 34 keeps adjusting the focal position on the object A even at a timing when the object A exists at the position A2a, and removes the focal position from the object A and returns the focal position to the preset setting position at a timing when the object A moves to the position A3a and stops.

Next, a case in which a shape of the object is set to a predetermined condition will be described. In this case, the focal position controller 34 determines whether the object has a predetermined shape based on the image data in which the object is captured. The focal position is adjusted on the object existing in the target region AR and having a predetermined shape. The focal position controller 34 does not adjust the focal position on the object that does not satisfy at least one of the condition that the object exists in the target region AR and the condition that the object has a predetermined shape. The focal position controller 34 keeps adjusting the focal position on the object while the object at the focal position has a predetermined shape and continues to exist in the target region AR. On the other hand, in a case in which the object no longer satisfies at least one of the condition that the object exists in the target region AR and the condition that the object has the predetermined shape, the focal position controller 34 removes the focal position from the object. The shape of the object here may be, for example, at least one of a size of the object or an outer shape of the object. For example, in a case in which the predetermined shape indicates a predetermined size or more, the focal position controller 34 adjusts the focal position on an object existing in the target region AR and having a predetermined size or more. Note that a 3D shape information acquired by the object information acquisition unit 32 may be used to acquire a shape information of the object.

A case in which the orientation of the object is set to a predetermined condition will be described. In this case, the focal position controller 34 determines whether the object is directed in a predetermined direction based on the image data in which the object is captured. The focal position is adjusted with respect to the object existing in the target region AR and facing the predetermined direction. The focal position controller 34 does not adjust the focal position on the object that does not satisfy at least one of the condition that the object exists in the target region AR and the condition that the object is directed in the predetermined direction. The focal position controller 34 keeps adjusting the focal position on the object during a period in which the object on the focal position is kept existing in the target region AR while facing the predetermined direction. On the other hand, in a case in which the object no longer satisfies at least one of the condition that the object exists in the target region AR and the condition that the object is directed in the predetermined direction, the focal position controller 34 removes the focal position from the object. Note that the information on the 3D shape acquired by the object information acquisition unit 32 may be used to acquire the information on the orientation of the object.

Note that the predetermined condition may be set by an arbitrary method, for example, may be set in advance. In this case, the focal position controller 34 may read information (for example, the moving direction and the moving speed) indicating a preset predetermined condition from the storage 22, or may acquire a predetermined condition from another device via the communication unit 20. Furthermore, for example, in a case in which a predetermined condition is not set in advance, the focal position controller 34 may automatically set a predetermined condition. Furthermore, for example, the user may set a predetermined condition. In this case, for example, the user may input information (for example, a moving direction and a moving speed) designating a predetermined condition to the input unit 16, and the focal position controller 34 may set a predetermined condition based on the information designated by the user.

As described above, in the seventh embodiment, the focal position controller 34 may adjust the focal position on the object existing in the target region AR and performing a predetermined motion. The focal position controller 34 keeps adjusting the focal position on the object during a period in which the object performs a predetermined motion, and removes the focal position from the object when the object no longer performs the predetermined motion. In this manner, in addition to being within the target region AR, satisfying a predetermined motion is also a condition for adjusting the focal position, whereby an object having a specific motion can be tracked and the focal position can be adjusted appropriately.

In the ninth embodiment, the focal position controller 34 may adjust the focal position on the object existing in the target region AR and having a predetermined shape. As described above, in addition to being in the target region AR, by setting the predetermined shape as a condition for adjusting the focal position, it is possible to track an object having a specific shape and appropriately adjust the focal position.

In the ninth embodiment, the focal position controller 34 may adjust the focal position on the object existing in the target region AR and facing a predetermined direction. As described above, in addition to being in the target region AR, by setting the condition that the object faces a predetermined direction as the condition for adjusting the focal position, it is possible to track the object in a specific direction and appropriately adjust the focal position.

Although the present embodiments have been described above, the embodiments are not limited by the contents of these embodiments. In addition, the above-described components include those that can be easily assumed by those skilled in the art, those that are substantially the same, and those in a so-called equivalent range. Furthermore, the above-described components can be appropriately combined, and the configurations of the respective embodiments can also be combined. Furthermore, various omissions, substitutions, or changes in the components can be made. Furthermore, in each embodiment, the operation of adjusting the focal position has been described as a feature point, but the operation of adjusting the focal position and another operation may be combined. For example, the operation of adjusting the focal position and the operation of zooming may be combined. Furthermore, in the description of each embodiment, the operation of adjusting the focal position may be replaced with another operation. For example, in the description of each embodiment, the operation of adjusting the focal position may be replaced with an operation of zooming. Furthermore, the controller 24 of the imaging device according to each embodiment may notify a predetermined transmission destination through the communication unit 20 when a set condition is satisfied, for example, the set condition includes a condition that an object enters or leaves a predetermined target region AR, or a condition that the object moves in a predetermined direction or the like. The set condition here may include, for example, a condition that the focal point is adjusted on the object by movement of the object into the target region AR as a trigger.

### Industrial Applicability

The imaging device, the imaging method, and the program of the present embodiment can be used, for example, for capturing an image.

### Reference Signs List

- 10: OPTICAL ELEMENT
- 12: IMAGING ELEMENT
- 14: OBJECT POSITION MEASUREMENT UNIT
- 30: TARGET REGION ACQUISITION UNIT
- 32: OBJECT INFORMATION ACQUISITION UNIT
- 34: FOCAL POSITION CONTROLLER
- AR: TARGET REGION
- AR0: IMAGING REGION
- AX1: FIRST POSITION
- AX2: SECOND POSITION
- L1: FIRST DISTANCE
- L2: SECOND DISTANCE

## Claims

1. An imaging device (100) capable of imaging an object (A), the imaging device (100) comprising:
an imaging element (12);
an object information acquisition unit (32) configured to acquire position information of an object (A) existing in an imaging region (ARO) that can be captured as an image in a real space of the imaging element (12), wherein the position information is based on time of flight, TOF, image information; and
a focal position controller (34) configured to control a focal position of the imaging device (100) by moving a position of an optical element (10) provided in the imaging device (100),
wherein the focal position controller (34) is further configured to:
adjust the focal position on an object (A) that exists in a target region (AR) and performs a predetermined motion in a moving direction or with a moving speed, the target region (AR) being set within a range of the imaging region (ARO) and being a region surrounded by a first position (AX1), a second position (AX2), and a third position (AX3), wherein the first position (AX1) is a virtual plane including each position where a distance from the imaging device (100) is a first distance (L1) set in advance, the second position (AX2) is a virtual plane including each position where a distance from the imaging device (100) is a second distance (L2) set in advance and shorter than the first distance (L1), and the third position (AX3) is a virtual surface dividing the target region (AR) with respect to the imaging region (ARO) in a direction radially outward from an optical axis (LX) of the imaging device (100), including positions radially outward and away from the optical axis (LX) of the imaging device 100 by a predetermined distance;
keep adjusting the focal position on the object (A) while the object (A) exists in the target region (AR) and performs the predetermined motion; and
stop adjusting the focal position on the object (A) when the object (A) moves out of the target region or the object (A) no longer performs the predetermined motion.

2. The imaging device (100) according to claim 1, wherein, when the object (A) moves from an outside of the target region (AR) to an inside of the target region (AR), the focal position controller (34) is further configured to recognize the object (A) as a target on which the focal position is to be adjusted.

3. The imaging device (100) according to claim 1 or 2, wherein the focal position controller (34) is further configured to adjust the focal position on the object (A) existing in the target region (AR) and having a predetermined shape.

4. The imaging device (100) according to claim 1 or 2, wherein the focal position controller (34) is further configured to adjust the focal position on the object (A) existing in the target region (AR) and facing a predetermined direction which is determined based on a 3D shape acquired by the object information acquisition unit (32) from the TOF image information.

5. The imaging device (100) according to any one of claims 1 to 4, wherein the focal position controller (34) is further configured to, when multiple objects (Aa, Ab, Ac, Ad) exist in the target region (AR), set an order of switching the focal position according to a position of each of the multiple objects (Aa, Ab, Ac, Ad), and switch the focal position such that the focal position is adjusted on each of the multiple objects (Aa, Ab, Ac, Ad).

6. The imaging device (100) according to claim 5, wherein the focal position controller (34) is further configured to set the order of switching the focal position such that a time required for switching the focal position is minimized by minimizing distances between the multiple objects (Aa, Ab, Ac, Ad).

7. The imaging device (100) according to claim 1, further comprising an object identification unit (40) configured to determine, when an object (A) exists in the target region (AR), whether the object (A) is the same **as** an object (A) existing in the target region (AR) since a predetermined time ago.

8. An imaging method for imaging an object (A), the imaging method comprising:
a step of acquiring position information of an object (A) existing in an imaging region (ARO) that can be captured as an image in a real space of an imaging element (12), wherein the position information is based on time of flight, TOF, image information;
a step of determining whether the object (A) performs a predetermined motion,
a step of controlling a focal position of an imaging device (100) by moving a position of an optical element (10) provided in the imaging device (100);
wherein the step of controlling the focal position further comprises:
adjusting the focal position on the object (A) that exists in a target region (AR) and performs the predetermined motion in a moving direction or with a moving speed, the target region (AR) being set within a range of the imaging region (ARO) and being a region surrounded by a first position (AX1), a second position (AX2), and a third position (AX3), wherein the first position (AX1) is a virtual plane including each position where a distance from the imaging device (100) is a first distance (L1) set in advance, the second position (AX2) is a virtual plane including each position where a distance from the imaging device (100) is a second distance (L2) set in advance and shorter than the first distance (L1), and the third position (AX3) is a virtual surface dividing the target region (AR) with respect to the imaging region (ARO) in a direction radially outward from an optical axis (LX) of the imaging device (100), including positions radially outward and away from the optical axis (LX) of the imaging device 100 by a predetermined distance;
keeping adjusting the focal position on the object (A) while the object (A) exists in the target region (AR) and performs the predetermined motion; and
stopping adjusting the focal position on the object (A) when the object (A) moves out of the target region (AR) or the object (A) no longer performs the predetermined motion.

## Patentansprüche

1. Eine Abbildungseinrichtung (100), die dazu in der Lage ist, ein Objekt (A) abzubilden, wobei die Abbildungseinrichtung (100) das Folgendes aufweist:
ein Abbildungselement (12);
eine Objektinformations-Erfassungseinheit (32), die eingerichtet ist zum Erfassen von Positionsinformationen eines Objekts (A), das in einem Abbildungsbereich (AR0) vorhanden ist, der als Bild in einem realen Raum des Abbildungselements (12) aufgenommen werden kann, wobei die Positionsinformationen auf Laufzeit-, TOF-, Bildinformationen basieren; und
eine Fokalpositions-Steuereinheit (34), die eingerichtet ist zum Steuern einer Fokalposition der Abbildungseinrichtung (100) durch Bewegen einer Position eines optischen Elements (10), das in der Abbildungseinrichtung (100) vorgesehen ist,
wobei die Fokalpositions-Steuereinheit (34) ferner eingerichtet ist:
zum Einstellen der Fokalposition auf ein Objekt (A), das in einem Zielbereich (AR) vorhanden ist und eine vorbestimmte Bewegung in einer Bewegungsrichtung oder mit einer Bewegungsgeschwindigkeit ausführt, wobei der Zielbereich (AR) innerhalb eines Bereichs des Abbildungsbereichs (AR0) eingestellt ist und ein Bereich ist, der durch eine erste Position (AX1), eine zweite Position (AX2) und eine dritte Position (AX3) umgeben ist, wobei die erste Position (AX1) eine virtuelle Ebene ist, die jede Position einschließt, an der ein Abstand von der Abbildungseinrichtung (100) ein im Voraus eingestellter erster Abstand (L1) ist, die zweite Position (AX2) eine virtuelle Ebene ist, die jede Position einschließt, an der ein Abstand von der Abbildungseinrichtung (100) ein im Voraus eingestellter zweiter Abstand (L2) ist, der kürzer als der erste Abstand (L1) ist, und die dritte Position (AX3) eine virtuelle Fläche ist, die den Zielbereich (AR) in Bezug auf den Abbildungsbereich (AR0) in einer Richtung radial nach außen von einer optischen Achse (LX) der Abbildungseinrichtung (100) teilt, wobei die virtuelle Fläche Positionen einschließt, die radial nach außen und von der optischen Achse (LX) der Abbildungseinrichtung (100) um einen vorbestimmten Abstand entfernt sind;
zum fortgesetzten Einstellen der Fokalposition auf das Objekt (A), während das Objekt (A) im Zielbereich (AR) vorhanden ist und die vorbestimmte Bewegung ausführt; und
zum Beenden des Einstellens der Fokalposition auf das Objekt (A), wenn das Objekt (A) den Zielbereich verlässt oder das Objekt (A) die vorbestimmte Bewegung nicht mehr ausführt.

2. Die Abbildungseinrichtung (100) nach Anspruch 1, wobei, wenn das Objekt (A) sich von einer Außenseite des Zielbereichs (AR) zu einer Innenseite des Zielbereichs (AR) bewegt, die Fokalpositions-Steuereinheit (34) ferner eingerichtet ist zum Erkennen des Objekts (A) als ein Ziel, auf das die Fokalposition einzustellen ist.

3. Die Abbildungseinrichtung (100) nach Anspruch 1 oder 2, wobei die Fokalpositions-Steuereinheit (34) ferner eingerichtet ist zum Einstellen der Fokalposition auf das Objekt (A), das im Zielbereich (AR) vorhanden ist und eine vorbestimmte Form hat.

4. Die Abbildungseinrichtung (100) nach Anspruch 1 oder 2, wobei die Fokalpositions-Steuereinheit (34) ferner eingerichtet ist zum Einstellen der Fokalposition auf das Objekt (A), das im Zielbereich (AR) vorhanden ist und einer vorbestimmten Richtung zugewandt ist, die basierend auf einer 3D-Form bestimmt wird, die von der Objektinformations-Erfassungseinheit (32) aus den TOF-Bildinformationen erfasst wird.

5. Die Abbildungseinrichtung (100) nach einem der Ansprüche 1 bis 4, wobei die Fokalpositions-Steuereinheit (34), wenn mehrere Objekte (Aa, Ab, Ac, Ad) im Zielbereich (AR) vorhanden sind, ferner eingerichtet ist zum Festlegen einer Reihenfolge des Umschaltens der Fokalposition nach einer Position jedes der mehreren Objekte (Aa, Ab, Ac, Ad) und zum Umschalten der Fokalposition derart, dass die Fokalposition auf jedes der mehreren Objekte (Aa, Ab, Ac, Ad) eingestellt wird.

6. Die Abbildungseinrichtung (100) nach Anspruch 5, wobei die Fokalpositions-Steuereinheit (34) ferner eingerichtet ist zum Festlegen der Reihenfolge des Umschaltens der Fokalposition derart, dass eine zum Umschalten der Fokalposition erforderliche Zeit durch Minimieren von Abständen zwischen den mehreren Objekten (Aa, Ab, Ac, Ad) minimiert wird.

7. Die Abbildungseinrichtung (100) nach Anspruch 1, ferner aufweisend eine Objektidentifikations-Einheit (40), die eingerichtet ist zum Bestimmen, wenn ein Objekt (A) im Zielbereich (AR) vorhanden ist, ob das Objekt (A) dasselbe ist wie ein Objekt (A), das seit einer vorbestimmten Zeit im Zielbereich (AR) vorhanden ist.

8. Ein Abbildungsverfahren zum Abbilden eines Objekts (A), wobei das Abbildungsverfahren das Folgendes aufweist:
einen Schritt des Erfassens von Positionsinformationen eines Objekts (A), das in einem Abbildungsbereich (AR0) vorhanden ist, der als Bild in einem realen Raum eines Abbildungselements (12) aufgenommen werden kann, wobei die Positionsinformationen auf Laufzeit-, TOF-, Bildinformationen basieren;
einen Schritt des Bestimmens, ob das Objekt (A) eine vorbestimmte Bewegung ausführt,
einen Schritt des Steuerns einer Fokalposition einer Abbildungseinrichtung (100) durch Bewegen einer Position eines optischen Elements (10), das in der Abbildungseinrichtung (100) vorgesehen ist;
wobei der Schritt des Steuerns der Fokalposition ferner das Folgendes aufweist:
Einstellen der Fokalposition auf das Objekt (A), das in einem Zielbereich (AR) vorhanden ist und die vorbestimmte Bewegung in einer Bewegungsrichtung oder mit einer Bewegungsgeschwindigkeit ausführt, wobei der Zielbereich (AR) innerhalb eines Bereichs des Abbildungsbereichs (AR0) eingestellt ist und ein Bereich ist, der durch eine erste Position (AX1), eine zweite Position (AX2) und eine dritte Position (AX3) umgeben ist, wobei die erste Position (AX1) eine virtuelle Ebene ist, die jede Position einschließt, an der ein Abstand von der Abbildungseinrichtung (100) ein im Voraus eingestellter erster Abstand (L1) ist, die zweite Position (AX2) eine virtuelle Ebene ist, die jede Position einschließt, an der ein Abstand von der Abbildungseinrichtung (100) ein im Voraus eingestellter zweiter Abstand (L2) ist, der kürzer als der erste Abstand (L1) ist, und die dritte Position (AX3) eine virtuelle Fläche ist, die den Zielbereich (AR) in Bezug auf den Abbildungsbereich (AR0) in einer Richtung radial nach außen von einer optischen Achse (LX) der Abbildungseinrichtung (100) teilt, wobei die virtuelle Fläche Positionen einschließt, die radial nach außen und von der optischen Achse (LX) der Abbildungseinrichtung (100) um einen vorbestimmten Abstand entfernt sind;
fortgesetztes Einstellen der Fokalposition auf das Objekt (A), während das Objekt (A) im Zielbereich (AR) vorhanden ist und die vorbestimmte Bewegung ausführt; und
Beenden des Einstellens der Fokalposition auf das Objekt (A), wenn das Objekt (A) den Zielbereich (AR) verlässt oder das Objekt (A) die vorbestimmte Bewegung nicht mehr ausführt.

## Revendications

1. Dispositif d'imagerie (100) capable d'imager un objet (A), le dispositif d'imagerie (100) comprenant :
un élément d'imagerie (12) ;
une unité d'acquisition d'informations d'objet (32) configurée pour acquérir des informations de position d'un objet (A) présent dans une région d'imagerie (AR0) qui peut être capturée sous forme d'image d'un espace réel de l'élément d'imagerie (12), dans lequel les informations de position sont basées sur des informations d'image de temps de vol, TOF ; et
un contrôleur de position focale (34) configuré pour contrôler une position focale du dispositif d'imagerie (100) en déplaçant une position d'un élément optique (10) prévu dans le dispositif d'imagerie (100),
dans lequel le contrôleur de position focale (34) est configuré en outre pour :
régler la position focale sur un objet (A) qui est présent dans une région cible (AR) et qui effectue un déplacement prédéterminé dans une direction de déplacement ou avec une vitesse de déplacement, la région cible (AR) étant définie au sein d'une plage de la région d'imagerie (AR0) et étant une région entourée par une première position (AX1), une deuxième position (AX2), et une troisième position (AX3), dans lequel la première position (AX1) est un plan virtuel comportant chaque position où une distance par rapport au dispositif d'imagerie (100) est une première distance (L1) définie à l'avance, la deuxième position (AX2) est un plan virtuel comportant chaque position où une distance par rapport au dispositif d'imagerie (100) est une deuxième distance (L2) définie à l'avance et plus courte que la première distance (L1), et la troisième position (AX3) est une surface virtuelle divisant la région cible (AR) par rapport à la région d'imagerie (AR0) dans une direction radialement vers l'extérieur par rapport à un axe optique (LX) du dispositif d'imagerie (100), comportant des positions radialement vers l'extérieur et éloignées de l'axe optique (LX) du dispositif d'imagerie 100 d'une distance prédéterminée ;
poursuivre le réglage de la position focale sur l'objet (A) tant que l'objet (A) se trouve dans la région cible (AR) et effectue le déplacement prédéterminé ; et
arrêter le réglage de la position focale sur l'objet (A) lorsque l'objet (A) sort de la région cible ou que l'objet (A) n'effectue plus le déplacement prédéterminé.

2. Dispositif d'imagerie (100) selon la revendication 1, dans lequel, lorsque l'objet (A) se déplace de l'extérieur de la région cible (AR) vers l'intérieur de la région cible (AR), le contrôleur de position focale (34) est configuré en outre pour reconnaître l'objet (A) comme étant une cible sur laquelle la position focale doit être réglée.

3. Dispositif d'imagerie (100) selon la revendication 1 ou 2, dans lequel le contrôleur de position focale (34) est configuré en outre pour régler la position focale sur l'objet (A) présent dans la région cible (AR) et ayant une forme prédéterminée.

4. Dispositif d'imagerie (100) selon la revendication 1 ou 2, dans lequel le contrôleur de position focale (34) est configuré en outre pour régler la position focale sur l'objet (A) présent dans la région cible (AR) et faisant face à une direction prédéterminée qui est déterminée sur la base d'une forme tridimensionnelle 3D acquise par l'unité d'acquisition d'informations d'objet (32) à partir des informations d'image de TOF.

5. Dispositif d'imagerie (100) selon l'une quelconque des revendications 1 à 4, dans lequel le contrôleur de position focale (34) est configuré en outre pour, lorsque plusieurs objets (Aa, Ab, Ac, Ad) sont présents dans la région cible (AR), définir un ordre de commutation de la position focale en fonction d'une position de chacun des plusieurs objets (Aa, Ab, Ac, Ad) et commuter la position focale de sorte que la position focale soit réglée sur chacun des plusieurs objets (Aa, Ab, Ac, Ad).

6. Dispositif d'imagerie (100) selon la revendication 5, dans lequel le contrôleur de position focale (34) est configuré en outre pour définir l'ordre de commutation de la position focale de sorte à minimiser un temps nécessaire pour commuter la position focale en minimisant des distances entre les plusieurs objets (Aa, Ab, Ac, Ad).

7. Dispositif d'imagerie (100) selon la revendication 1, comprenant en outre une unité d'identification d'objet (40) configurée pour déterminer, lorsqu'un objet (A) est présent dans la région cible (AR), si l'objet (A) est le même qu'un objet (A) présent dans la région cible (AR) depuis un temps prédéterminé dans le passé.

8. Procédé d'imagerie d'un objet (A), le procédé d'imagerie comprenant :
une étape d'acquisition d'informations de position d'un objet (A) présent dans une région d'imagerie dans une région d'imagerie (AR0) qui peut être capturée sous forme d'image d'un espace réel d'un élément d'imagerie (12), dans lequel les informations de position sont basées sur des informations d'image de temps de vol, TOF ;
une étape de détermination de si l'objet (A) effectue un déplacement prédéterminé,
une étape de contrôle d'une position focale d'un dispositif d'imagerie (100) en déplaçant une position d'un élément optique (10) prévu dans le dispositif d'imagerie (100),
dans lequel l'étape de contrôle de la position focale comprend en outre :
le réglage de la position focale de l'objet (A) présent dans une région cible (AR) et qui effectue le déplacement prédéterminé dans une direction de déplacement ou avec une vitesse de déplacement, la région cible (AR) étant définie au sein d'une plage de la région d'imagerie (AR0) et étant une région entourée par une première position (AX1), une deuxième position (AX2), et une troisième position (AX3), dans lequel la première position (AX1) est un plan virtuel comportant chaque position où une distance par rapport au dispositif d'imagerie (100) est une première distance (L1) définie à l'avance, la deuxième position (AX2) est un plan virtuel comportant chaque position où une distance par rapport au dispositif d'imagerie (100) est une deuxième distance (L2) définie à l'avance et plus courte que la première distance (L1), et la troisième position (AX3) est une surface virtuelle divisant la région cible (AR) par rapport à la région d'imagerie (AR0) dans une direction radialement vers l'extérieur par rapport à un axe optique (LX) du dispositif d'imagerie (100), comportant des positions radialement vers l'extérieur et éloignées de l'axe optique (LX) du dispositif d'imagerie 100 d'une distance prédéterminée ;
la poursuite du réglage de la position focale sur l'objet (A) tant que l'objet (A) est présent dans la région cible (AR) et effectue le déplacement prédéterminé ; et
l'arrêt du réglage de la position focale sur l'objet (A) lorsque l'objet (A) sort de la région cible ou que l'objet (A) n'effectue plus le déplacement prédéterminé.
